(19) Europäisches Patentamt
European Patent Office
Office européen des brevets

(11) Veröffentlichungsnummer : **0 278 910 B1**

# (12) EUROPÄISCHE PATENTSCHRIFT

(45) Veröffentlichungstag der Patentschrift : **22.01.92 Patentblatt 92/04**

(51) Int. Cl.$^5$ : **C09B 45/14,** C09B 56/02, C09B 62/477, D06P 1/10

(21) Anmeldenummer : **88810068.2**

(22) Anmeldetag : **05.02.88**

## (54) Schwermetallkomplexfarbstoffe, deren Herstellung und Verwendung.

(30) Priorität : **11.02.87 CH 496/87**

(43) Veröffentlichungstag der Anmeldung : **17.08.88 Patentblatt 88/33**

(45) Bekanntmachung des Hinweises auf die Patenterteilung : **22.01.92 Patentblatt 92/04**

(84) Benannte Vertragsstaaten : **CH DE FR GB LI**

(56) Entgegenhaltungen :
**DE-B- 1 219 146**
**US-A- 2 186 629**

(73) Patentinhaber : **CIBA-GEIGY AG**
**Klybeckstrasse 141**
**CH-4002 Basel (CH)**

(72) Erfinder : **Lehmann, Urs, Dr.**
**Palmenstrasse 17**
**CH-4055 Basel (CH)**

EP 0 278 910 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Schwermetallkomplexfarbstoffe, Verfahren zu deren Herstellung und die Verwendung dieser Farbstoffe zum Färben und Bedrucken von Materialien faseriger Strukturen, insbesondere Textilmaterialien, sowie Leder.

Die der vorliegenden Erfindung zugrunde liegende Aufgabe war es, neue Schwermetallkomplexfarbstoffe zu finden, die zum Färben und Bedrucken von insbesondere natürlichen und synthetischen Polyamidfasermaterialien sowie auch hydroxylgruppenhaltigen Fasermaterialien aus wässrigem Bad geeignet sind.

Diese Aufgabe wird mit den erfindungsgemässen Schwermetallkomplexfarbstoffen von Azo- oder Azomethinfarbstoffen der Formel (1) gelöst.

Gegenstand der vorliegenden Erfindung sind somit Schwermetallkomplexe von Azo- oder Azomethinfarbstoffen der Formel

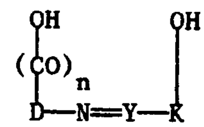 (1)

worin D der Rest einer Diazokomponente der Benzol-, Naphthalin- oder heterocyclischen Reihe ist, K-OH der Rest der Formel

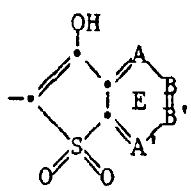 (2), 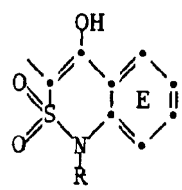 (3) oder 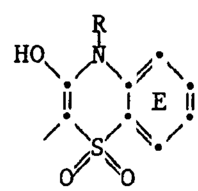 (4)

ist, worin die Symbole A, A′, B und B′ je ein Kohlenstoffatom bedeuten, oder worin eines der Symbole A, A′, B oder B′ ein Stickstoffatom und die übrigen ein Kohlenstoffatom bedeuten, R Wasserstoff, gegebenenfalls substituiertes $C_1$-$C_4$-Alkyl oder gegebenenfalls substituiertes Phenyl ist und der Ring E noch weiter substituiert sein kann, Y ein Stickstoffatom oder eine CH-Gruppe und n=0 oder 1 ist, und worin

$$-(CO)_n-OH$$

in Nachbarstellung zu -N=Y-an D gebunden ist.

Als Rest

$$D-(CO)_n-OH$$

kommen beliebige metallisierbare Diazokomponenten der Benzol-, Naphthalin- oder heterocyclischen Reihe in Betracht, insbesondere handelt es sich um Aminophenole und Aminonaphthole sowie Aminobenzoesäure, die ausser der metallisierbaren Gruppe noch die in Azofarbstoffen üblichen Substituenten enthalten können. Als Beispiele für derartige Substituenten seien genannt: Alkylgruppen mit 1 bis 8, vorzugsweise 1 bis 4, Kohlenstoffatomen, wie z.B. Methyl, Aethyl, Propyl, Isopropyl, Butyl, Isobutyl, sek.-Butyl, tert.-Butyl, Hexyl, Octyl, Alkoxygruppen mit 1 bis 8 Kohlenstoffatomen, insbesondere 1 bis 4 Kohlenstoffatomen, wie z.B. Methoxy, Aethoxy, Propoxy, Isopropoxy, Butoxy, Acrylaminogruppen wie Alkanoylaminogruppen mit 2 bis 8 Kohlenstoffatomen und Alkoxycarbonylaminogruppen mit 2 bis 8 Kohlenstoffatomen wie z.B. Acetylamino, Propionylamino, Methoxycarbonylamino, Aethoxycarbonylamino, Benzoylamino, Amino, Mono- oder Dialkylamino mit 1 bis 8 Kohlenstoffatomen im Alkylrest, Phenylamino, Alkoxycarbonyl mit 1 bis 8 Kohlenstoffatomen im Alkoxyrest, Nitro, Cyan, Trifluormethyl, Halogen, wie Fluor, Brom oder insbesondere Chlor, Sulfamoyl, am Stickstoffatom ein oder zweifach durch $C_1$-$C_4$-Alkyl, $C_1$-$C_4$-Alkoxy-$C_1$-$C_4$-Alkyl, Hydroxy-$C_1$-$C_4$-Alkyl, $C_5$-$C_7$-Cycloalkyl oder Phenyl substituiertes Sulfamoyl, Carbamoyl, Ureido, Hydroxy, $C_1$-$C_8$-Alkyl sulfonyl, Phenylsulfonyl, Carboxy, Sulfomethyl, Sulfo, faserreaktive Reste und Arylazogruppen wie z.B. die Phenylazo- und Naphthylazogruppe.

Als Rest R in den Formeln (3) und (4) kommt als Alkylrest in Betracht: Methyl, Aethyl, Propyl, Isopropyl,

Butyl, Isobutyl, sek.-Butyl, tert.-Butyl, sowie die entsprechenden Reste die z.B. durch Hydroxy, Alkoxy mit 1 bis 4 Kohlenstoffatomen, Phenyl, Sulfo, Sulfato oder Halogen oder einem faserreaktiven Rest substituiert sind, z.B. β-Hydroxyethyl, β-Methoxyethyl, β-Chlorethyl, Benzyl.

Als Rest R in den Formeln (3) und (4) kommt als substituierter Phenylrest z.B. ein durch $C_1$-$C_4$-Alkyl, $C_1$-$C_4$-Alkoxy, $C_2$-$C_6$-Alkanoylamino, Sulfo oder Halogen substituierter Phenylrest in Betracht. Insbesondere bedeutet R Wasserstoff.

Als Beispiele für Substituenten des Ringes E in den Formeln (2), (3) und (4) kommen die gleichen wie oben für

$$D-(CO)_n-OH$$

angegebenen Substituenten in Betracht. Ferner kann der Benzolring E in Formel (2), d.h. A, A′, B und B′ in Formel (2) bedeuten je ein Kohlenstoffatom, einen ankondensierten Benzolring in Position B und B′ enthalten (Naphthiophen-Rest).

Im Rest der Formel (2) ist A, A′, B und B′ vorzugsweise ein Kohlenstoffatom; falls einer der Reste ein Stickstoffatom ist, bedeuten A, A′ und B vorzugsweise je ein Kohlenstoffatom und B′ ein Stickstoffatom.

Bevorzugt sind Schwermetallkomplexe die als Schwermetall ein Kupfer-, Nickel-, Eisen-, Chrom- oder Kobaltatom enthalten.

Besonders bevorzugt sind Schwermetallkomplexe von Azo- oder Azomethinfarbstoffen der Formel (1), worin

- ein Molekül des Azo- oder Azomethinfarbstoffes der Formel (1) an ein Atom Kupfer oder Nickel gebunden ist;
- zwei Moleküle des Azo- oder Azomethinfarbstoffes der Formel (1) an ein Atom Nickel oder Kobalt gebunden sind;
- ein oder zwei Moleküle des Azo- oder Azomethinfarbstoffes der Formel (1) an ein Atom Chrom gebunden ist (sind);
- ein Molekül des Azo- oder Azomethinfarbstoffes der Formel (1) und ein Molekül einer anderen metallisierbaren Azo- oder Azomethinverbindung an ein Atom Chrom gebunden sind.

Bevorzugt sind ferner Schwermetallkomplexe von Azofarbstoffen der Formel (1), d.h. Y bedeutet das Stickstoffatom; insbesondere bedeutet Y ein Stickstoffatom für die oben angegebenen besonders bevorzugten Schwermetallkomplexe.

Die Schwermetallkomplexe der Azo- oder Azomethinfarbstoffe der Formel (1), worin K-OH den Rest der Formel (2) bedeutet, sind besonders bevorzugt sofern A, A′, B und B′ je ein Kohlenstoffatom bedeuten, insbesondere die oben als besonders bevorzugt angegebenen Schwermetallkomplexe und ganz besonders die Schwermetallkomplexe worin Y ein Stickstoffatom ist.

Besonders bevorzugt sind ferner die Schwermetallkomplexe wie oben angegeben, worin der Azo- oder Azomethinfarbstoff der Formel (1) keine, eine oder zwei Sulfonsäuregruppen enthält.

Ganz besonders bevorzugt sind die Schwermetallkomplexe, insbesondere die Kupfer-, Nickel-, Chrom- und Kobaltkomplexe, von Azofarbstoffen der Formel

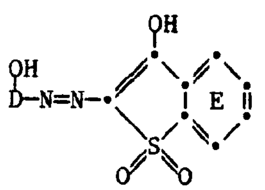 (5), 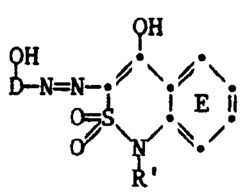 (6) oder 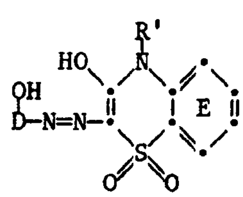 (7)

worin D ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, durch $C_1$-$C_4$-Alkyl oder $C_1$-$C_4$-Alkoxy-$C_1$-$C_4$-Alkyl substituiertes Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Phenyl- oder Naphthylrest ist, oder D-OH einen gegebenenfalls durch die angegebenen Substituenten susbstituierten Carboxyphenyl-Rest bedeutet, R′ Wasserstoff oder $C_1$-$C_4$-Alkyl ist, und der Benzring E substituiert sein kann durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen in Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl,

Sulfo, faserreaktive Reste und Phenylazogruppen, und worin die Hydroxygruppe in D in o-Position zu der Azogruppe steht.

Die Schwermetallkomplexe vone Azofarbstoffen der Formel (5), (6) oder (7), welche als Schwermetall ein Kobalt- oder Chromatom enthalten, sind besonders interessant, ganz besonders diejenigen, die zwei Moleküle des Azofarbstoffes der Formel (5), (6) oder (7) an ein Atom Kobalt gebunden enthalten.

Wichtig sind ferner die Chromkomplexe, welche ein Molekül des Azofarbstoffes der Formel (5), (6) oder (7) und ein Molekül des Farbstoffes der Formel

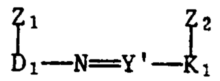
(8),

worin $D_1$ der Rest einer Diazokomponente der Benzol- oder Naphthalinreihe oder der heterocyclischen Reihe, $K_1$ der Rest einer Kupplungskomponente der Benzol-, Naphthalin- oder heterocyclischen Reihe oder einer Ketomethylenverbindung, Y′ ein Stickstoffatom oder eine CH-Gruppe, $Z_1$ in o-Stellung zu -N=Y′- eine -OH oder -COOH oder $-NH_2$-Gruppe und $Z_2$ die -OH oder -NH(R) Gruppe ist, wobei R Wasserstoff, gegebenenfalls substituiertes $C_1$-$C_4$-Alkyl oder gegebenenfalls substituiertes Phenyl ist, und $Z_2$ in Nachbarstellung zu -N=Y′- an $K_1$ gebunden ist, an ein Atom Chrom gebunden enthalten. Vorzugsweise bedeutet Y′ ein Stickstoffatom.

Besonders wichtig sind die oben angegebenen Chromkomplexe, worin in Formel (8) $D_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstofffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Phenyl- oder Naphthylrest ist, und $K_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Rest einer Kupplungskomponente der Benzol- oder Naphthalinreihe oder der 5-Pyrazolon-, 5-Aminopyrazol-, Chinolin-, Acetoacetarylid- oder Benzoylessigsäurearylid-Reihe ist, und Y′ ein Stickstoffatom bedeutet.

Ganz besonders wichtig sind Schwermetallkomplexe, die an ein Atom Chrom einen Azofarbstoff der Formel (5), worin D-OH der 2-Hydroxy-4-sulfonaphthyl-1-, 2-Hydroxy-4-sulfo-6-nitronaphthyl-1- oder 2-Hydroxy-4-nitrophenyl-1-Rest ist und der Benzolring E unsubstituiert ist, und ein Molekül des Azofarbstoffes der Formel (8) gebunden enthalten, worin $D_1$-$Z_1$ der 2-Hydroxy-5-nitrophenyl-1-, 2-Hydroxy-4-sulfonaphthyl-1- oder 2-Hydroxy-4-nitrophenyl-1-Rest und $K_1$-$Z_2$ der 1-Hydroxy-5,8-dichlornaphthyl-2-, 2-Hydroxynaphthyl-1-, 2-Hydroxy-6-sulfonaphthyl-1- oder 1-Phenyl-3-methyl-5-pyrazolon-Rest ist, und Y′ ein Stickstoffatom bedeutet.

Besonders wichtig sind ferner Schwermetallkomplexe, die an ein Atom Kobalt oder Chrom zwei Moleküle des Azofarbstoffes der Formel (5), (6) oder (7), worin D-OH der 2-Hydroxy-4-nitrophenyl-1-, 2-Hydroxy-5-nitrophenyl-1-, 2-Hydroxy-4-nitro-5-sulfophenyl-1-, 2-Hydroxy-3-sulfo-5-nitrophenyl-1-, 2-Hydroxy-3-nitro-5-sulfophenyl-1-, 2-Hydroxy-3-sulfo-5-chlorphenyl-1-, 2-Hydroxy-4-sulfonaphenyl-1-, 2-Hydroxy-4-sulfo-6-nitronaphthyl-1-, 2-Hydroxy-4-sulfo-6-aminonaphthyl-1-, 2-Hydroxy-4-sulfo-6-($\alpha$,$\beta$-dibrompropionylamino)naphthyl-1-, 2-Hydroxy-5-($\beta$-methoxyäthylaminosulfonyl)phenyl-1-, 2-Hydroxy-4-aminophenyl-1-, 2-Hydroxy-4-($\alpha$,$\beta$-dibrompropionylamino)-phenyl-1-, oder 2-Carboxy-4-sulfophenyl-1-Rest ist, und der Benzolring E in Formeln (5) und (6) unsubstituiert ist und in Formel (7) durch Nitro, Amino oder $\alpha$,$\beta$-Dibrompropionylamino subsituiert sein kann und R′ Wasserstoff bedeutet.

Besonders wichtig sind auch die 1:1-Chromkomplexe der Azofarbstoffe der Formeln (5) und (7), worin D-OH ein 2-Hydroxy-4-nitrophenyl-1, 2-Hydroxy-4-nitro-5-sulfophenyl-1-, 2-Hydroxy-4-sulfonaphthyl-1-, 2-Hydroxy-4-sulfo-6-nitronapthyl-1-, 2-Hydroxy-4-sulfo-6-aminonaphthyl-1-, 2-Hydroxy-4-sulfo-6- ($\alpha$,$\beta$- dibrompropionylamino)naphthyl-1- oder 2-Carboxy-4-sulfophenyl-1-Rest ist, und der Benzolring E in Formel (5) unsubstituiert ist und in Formel (7) durch Nitro, Amino oder $\alpha$,$\beta$-Dibrompropionylamino substituiert sein kann, und R′ Wasserstoff bedeutet.

Die erfindungsgemässen Schwermetallkomplexe können im Liganden der Formel (1) und, im Fall von 1:2-Chromkomplexfarbstoffen, die einen Liganden der Formel (1) und einen weiteren metallisierbaren Azofarbstoff als weiteren Liganden enthalten, sowohl im Liganden der Formel (1) als auch in dem anderen Liganden einen faserreaktive Rest enthalten.

Unter einem faserreaktiven Rest werden solche Acylreste verstanden, die eine oder mehrere reaktive Gruppen oder abspaltbare Substituenten im Molekül aufweisen, welche z.B. mit Cellulosematerialien in Gegenwart säurebindender Mittel und gegebenenfalls unter Einwirkung von Wärme mit den Hydroxylgruppen der Cellulose, oder mit synthetischen oder natürlichen Polyamidfasern, wie z.B. Wolle, mit den $NH_2$-Gruppen dieser Fasern unter Ausbildung kovalenter Bindungen zu reagieren vermögen. Derartige faserreaktive Gruppierungen sind aus der Literatur in grosser Zahl bekannt, z.B. EP-A-0 142 104.

Vorzugsweise handelt es sich um einen faserreaktiven Rest der aliphatischen oder heterocyclischen Reihe, der direkt oder über ein Brückenglied an den Schwermetallkomplex gebunden ist.

Vorzugsweise ist der faserreaktive Rest über eine gegebenenfalls monoalkylierte Aminogruppe wie z.B. -NH-, $-N(CH_3)-$, $-N(C_2H_5)-$ oder $-N(C_3H_7)$ oder über ein eine Aminogruppe enthaltendes Brückenglied oder über den Rest -NR- in Formeln (3) und (4) an den Schwermetallkomplex gebunden.

Als faserreaktiver Rest ist besonders bevorzugt ein Acryloyl-, Mono-, Di- oder Trihalogenacryloyl- oder methacryloyl-, Mono- oder Dihalogenpropionyl-, Phenylsulfonylpropionyl-, Vinylsulfonylpropionyl-, ß-Chloräthylsulfonylpropionyl-, Methylsulfonylpropionyl-, ß-Sulfatoäthylsulfonylrest oder ein Rest der Mono-, Di- oder Trihalogenpyrimidyl- oder Mono- oder Dihalogentriazinylreihe.

Ganz besonders bevorzugt ist als faserreaktiver Rest der 2,4-Difluor-5-chlorpyrimidin-6-yl-Rest sowie der $\alpha,\beta$-Dibrompropionyl-Rest und der $\alpha$-Bromacryloyl-Rest.

Die bevorzugten faserreaktiven Reste sind insbesondere über ein Brückenglied der Formel

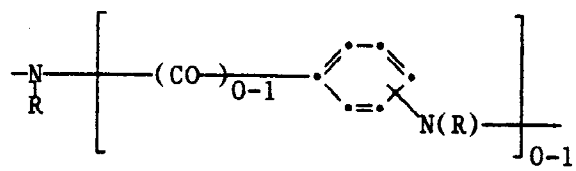

oder $-CH_2N(R)-$ an den Schwermetallkomplex gebunden, wobei R die unter Formel (3) angegebene Bedeutung hat. Die Schwermetallkomplexe können bis zu vier faserreaktive Reste enthalten. Bevorzugt sind ein oder zwei faserreaktive Reste.

Gegenstand der Erfindung ist ferner ein Verfahren zur Herstellung der erfindungsgemässen Schwermetallkomplexe von Azo- oder Azomethinfarbstoffen der Formel (1), welches dadurch gekennzeichnet ist, dass man einen Azo- oder Azomethinfarbstoff der Formel (1) mit einer ein Schwermetallatom abgebenden Verbindung oder mit einer zur Anlagerung des Azo- oder Azomethinfarbstoffes der Formel (1) fähigen Schwermetallverbindung umsetzt.

Geeignete Schwermetalle sind vor allem Kupfer, Nickel, Eisen, Kobalt oder Chrom. Man verwendet die üblichen Salze oder Komplexverbindungen dieser Metalle wie z.B. Kupfersulfat, Kupferacetat, Kupferkomplexe aliphatischer Aminocarbonsäuren, Hydroxycarbonsäuren, Di-oder Tricarbonsäuren oder aromatischer Hydroxycarbonsäuren wie des Glykokolls, der Milchsäure, Oxalsäure, Zitronensäure, Salicylsäure, und vor allem der Weinsäure; Nickelsulfat, Kobalt-(II)-sulfat, Kobalt-(II)-acetat, frisch gefälltes Kobalt-(II)-hydroxyd; Chrom-(III)-chlorid, Chrom-(III)-fluorid, Chrom-(III)-formiat, Chrom-(III)-acetat, $Cr(OH)SO_4$, Eisen-(III)-chlorid sowie komplexe Eisen- und Chromverbindungen aliphatischer Dicarbonsäuren, Hydroxycarbonsäuren oder aromatischer Hydroxycarbonsäuren, wie z.B. Natriumchromsalicylat.

Es können auch Chrom-(VI)-Verbindungen wie Alkalichromate verwendet werden, wenn das Reaktionsgemisch ein Reduktionsmittel (z.B. Butanol oder Glukose) enthält.

Die Umsetzung mit dem schwermetallabgebenden Mittel erfolgt nach üblichen Verfahren, je nach der Löslichkeit der Komponenten in verschiedenen Lösungsmitteln, wie z.B. Wasser, Aethanol, Formamid, Glykoläther, Pyridin u.a., gegebenenfalls bei erhöhter Temperatur, in schwach saurem bis alkalischem Medium und in der Weise, dass Metallkomplexe entstehen, die pro Molekül Azoverbindung ein oder ein halbes Atom Metall in komplexer Bindung enthalten. Man erhält auf diese Weise 1:1-Kupfer-, 1:1-Nickel-, 1:2-Nickel-, 1:1-Chrom-, 1:2-Chrom-, 1:2-Eisen- und 1:2-Kobaltkomplexe.

Man arbeitet bei Raumtemperatur oder mit Vorteil in der Wärme, offen oder unter Druck, gegebenenfalls in Anwesenheit geeigneter Zusätze, wie z.B. von Salzen organischer Säuren, von Basen oder anderen, die Komplexbildung fördernden Mitteln. Die pH-Verhältnisse sind durch die Art des Metallisierungsverfahrens bestimmt; z.B. wird die Kupferung mit Kupfersulfat schwach sauer durchgeführt, mit Kupfertetramminsulfat jedoch alkalisch.

Im Falle von 1:2-Komplexen können beide Azofarbstoffe, die an dasselbe Metallatom gebunden sind, der Formel (1) entsprechen. Vorzugsweise handelt es sich dann um identische Verbindungen. Derartige symmetrische Komplexe haben als Metallatom Nickel oder insbesondere Kobalt. Einer der in 1:2-Komplexen vorhandenen Azo-oder Azomethinfarbstoffe kann jedoch auch ein anderer metallisierbarer Azo- oder Azomethinfarbstoff sein.

Bevorzugte Verfahrensweisen sind dadurch gekennzeichnet, dass man
– ein Molekül des Azo- oder Azomethinfarbstoffes der Formel (1) mit einer ein Atom Kupfer oder Nickel abgebenden Verbindung umsetzt;
– zwei Moleküle des Azo- oder Azomethinfarbstoffes der Formel (1) mit einer ein Atom Nickel oder Kobalt abgebenden Verbindung umsetzt;
– ein oder zwei Moleküle des Azo- oder Azomethinfarbstoffes der Formel (1) mit einer ein Atom Chrom abgebenden Verbindung umsetzt;
– ein Molekül des Azo- oder Azomethinfarbstoffes der Formel (1) und ein Molekül einer anderen metallisierbaren Azo- oder Azomethinverbindung mit einer ein Atom Chrom abgebenden Verbindung umsetzt, oder ein Molekül des Azo- oder Azomethinfarbstoffes der Formel (1) mit einem 1:1-Chromkomplexazo- oder -azomethinfarbstoff umsetzt.

Eine weitere bevorzugte Verfahrensweise des erfindungsgemässen Verfahrens ist dadurch gekennzeichnet, dass man Azofarbstoff der Formel (1) verwendet, d.h. Y in Formel (1) bedeutet ein Stickstoffatom. Insbesondere bedeutet Y ein Stickstoffatom in dem erfindungsgemässen Verfahren zur Herstellung der oben angegebenen bevorzugten 1:1-Kupfer- oder 1:1-Nickel-, 1:2-Nickel- oder 1:2-Kobalt-, 1:1-Chrom- oder 1:2-Chromkomplexe sowie der unsymmetrischen 1:2-Chromkomplexe die ein Molekül des Azofarbstoffes der Formel (1) und ein Molekül einer anderen metallisierbaren Azo- oder Azomethinverbindung enthalten.

Eine besonders bevorzugte Verfahrensweise ist dadurch gekennzeichnet, dass man als Azo- oder Azomethinfarbstoff der Formel (1) einen solchen Farbstoff verwendet, worin K-OH den Rest der Formel (2) bedeutet und A, A′, B und B′ je ein Kohlenstoffatom bedeuten, und dann mit einer ein Schwermetallatom abgebenden Verbindung umsetzt; insbesondere mit einer ein Kupfer-, Nickel-, Kobalt- oder Chromatom abgebenden Verbindung.

Eine weitere besonders bevorzugte Verfahrensweise ist dadurch gekennzeichnet, dass man Azo- oder Azomethinfarbstoffe der Formel (1) mit einer Schwermetall abgebenden Verbindung umsetzt, wobei der gebildete Schwermetallkomplex keine, eine oder zwei Sulfonsäuregruppen enthält.

Eine ganz besonders bevorzugte Verfahrensweise ist dadurch gekennzeichnet, dass man eine das Kupfer-, Nickel-, Kobalt- oder Chromatom abgebende Verbindung mit einem Azofarbstoff der Formel

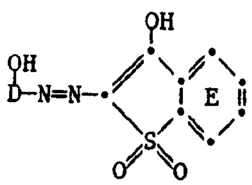 (5), 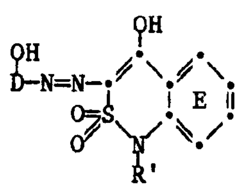 (6) oder 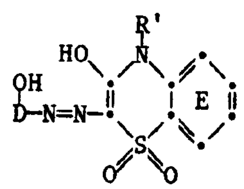 (7)

worin D, R′ und E die unter den Formeln (5), (6) und (7) angegebenen Bedeutungen haben, umsetzt. Besonders bevorzugt ist die Verwendung von Chrom- und insbesondere von Kobalt- abgebenden Verbindungen, wobei im Fall des Kobaltkomplexes zwei Azofarbstoffe der Formel (5), (6) oder (7) mit einem Atom Kobalt umgesetzt werden.

Wichtige unsymmetrische Chromkomplexe werden gemäss dem erfindungsgemässen Verfahren hergestellt, wenn man ein Molekül des Azofarbstoffes der Formel (5), (6) oder (7) und ein Molekül des Azo- oder Azomethinfarbstoffes der Formel (8) mit einer ein Atom Chrom abgebenden Verbindung umsetzt.

Eine Variante dieser Verfahrensweise ist dadurch gekennzeichnet, dass man zuerst den 1:1-Chromkomplex des Azofarbstoffes der Formel (5), (6) oder (7) oder des Azo- oder Azomethinfarbstoffes der Formel (8) herstellt und dann diesen 1:1-Komplex mit dem Azo- oder Azomethinfarbstoff der Formel (8) oder einem Farbstoff der Formel (5), (6) oder (7) umsetzt.

Eine ganz besonders wichtige Verfahrensweise ist dadurch gekennzeichnet, dass man eine das Chromatom abgebende Verbindung mit einem Azofarbstoff der Formel (5), (6) oder (7) und einem Azofarbstoff der Formel (8), worin $D_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Phenyl- oder Naphthylrest ist, und $K_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- der Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfomethyl, Sulfo, faserreaktive Reste und Phenylazogruppen substituierter Rest einer Kupplungskomponente der Benzol- oder Naphthalinreihe oder der 5-Pyrazolon-, 5-Aminopyrazol-, Chinolin-, Acetoacetarylid- oder Benzoylessigsäurearylid-Reihe ist, umsetzt.

Vorzugsweise verwendet man einen Azofarbstoff der Formel (8), d.h. Y′ bedeutet ein Stickstoffatom.

Ganz besonders interessante Schwermetallkomplexe werden erhalten, indem man eine das Chromatom abgebende Verbindung mit einem Azofarbstoff der Formel (5), worin D-OH der 2-Hydroxy-4-sulfonaphthyl-1-, 2-Hydroxy-4-sulfo-6-nitronaphthyl-1- oder 2-Hydroxy-4-nitrophenyl-1-Rest ist und der Benzolring E unsubstituiert ist, und einem Molekül des Azofarbstoffes der Formel (8), worin $D_1$-$Z_1$ der 2-Hydroxy-5-nitrophenyl-1-, 2-Hydroxy-4-sulfonaphthyl-1- oder 2-Hydroxy-4-nitrophenyl-1-Rest und $K_1$-$Z_2$ der 1-Hydroxy-5,8-dichlornaphthyl-2-, 2-Hydroxynaphthyl-1-, 2-Hydroxy-6-sulfonaphthyl-1- oder 1-Phenyl-3-methyl-5-pyrazolon-Rest ist, und Y′ ein Stickstoffatom bedeutet, umsetzt.

Weitere besonders wichtige Schwermetallkomplexe werden erhalten, indem man eine ein Chrom- oder Kobaltatom abgebende Verbindung mit zwei Molekülen der Azoverbindung der Formel (5), (6) oder (7), worin der Benzolring E in Formeln (5) und (6) unsubstituiert ist und in Formel (7) durch Nitro, Amino oder α,β-Dibrompropionylamino substituiert sein kann und R′ Wasserstoff bedeutet, und worin D-OH der 2-Hydroxy-4-nitrophenyl-1-, 2-Hydroxy-5-nitrophenyl-1-, 2-Hydroxy-4-nitro-5-sulfophenyl-1-, 2-Hydroxy-3-sulfo-5-nitrophenyl-1-, 2-Hydroxy-3-nitro-5-sulfophenyl-1-, 2-Hydroxy-3-sulfo-5-chlorphenyl-1-, 2-Hydroxy-4-sulfonaphthyl-1-, 2-Hydroxy-4-sulfo-6-nitronaphthyl-1-, 2-Hydroxy-4-sulfo-6-aminonaphthyl-1-, 2-Hydroxy-4-sulfo-6-(α,β-dibrompropionylamino)naphthyl-1-, 2-Hydroxy-5-(β-methoxyäthylaminosulfonyl)phenyl-1-, 2-Hydroxy-4-aminophenyl-1-, 2-Hydroxy-4-(α,β-dibrompropionylamino)phenyl-1-, oder 2-Carboxy-4-sulfophenyl-1-Rest ist, umsetzt.

Weitere besonders wichtig 1:1-Chromkomplexe werden erhalten, indem man eine ein Chromatom abgebende Verbindung mit Azofarbstoffen der Formeln (5) oder (7), worin der Benzolring E in Formel (5) unsubstituiert ist und in Formel (7) durch Nitro, Amino oder α,β-Dibrompropionylamino substituiert sein kann und R′ Wasserstoff bedeutet, und worin D-OH ein 2-Hydroxy-4-nitrophenyl-1-, 2-Hydroxy-4-nitro-5-sulfophenyl-1-, 2-Hydroxy-4-sulfonaphthyl-1-, 2-Hydroxy-4-sulfo-6-nitronaphthyl-1-, 2-Hydroxy-4-sulfo-6-aminonaphthyl-1-, 2-Hydroxy-4-sulfo-6-(α,β-dibrompropionylamino)naphthyl-1- oder 2-Carboxy-4-sulfophenyl-1-Rest ist, umsetzt.

Die Azofarbstoffe der Formel (1) werden in an sich bekannter Weise hergestellt, indem man ein Amin der Formel

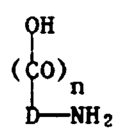 (9)

diazotiert und auf eine Kupplungskomponente der Formel

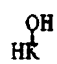 (10)

kuppelt, wobei D, K und n die unter Formel (1) angegebenen Bedeutungen haben.

Die Diazotierung der Diazokomponente der Formel (9) erfolgt in der Regel durch Einwirken salpetriger Säure in wässrigmineralsaurer Lösung bei tiefer Temperatur, die Kupplung auf die Kupplungskomponente der Formel (10) bei sauren, neutralen bis alkalischen pH-Werten.

Die Azofarbstoffe der Formel (8) sind bekannt und werden in an sich bekannter Weise hergestellt, indem man ein Amin der Formel

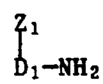 (11)

diazotiert und auf eine Kupplungskomponente der Formel

 (12)

kuppelt, wobei $D_1$, $K_1$, $Z_1$ und $Z_2$ die unter Formel (8) angegebenen Bedeutungen haben.

Die Diazotierung der Diazokomponente der Formel (11) erfolgt in der Regel durch Einwirken salpetriger Säure in wässrigmineralsaurer Lösung bei tiefer Temperatur und die Kupplung auf die Kupplungskomponente der Formel (12) bei sauren, neutralen bis alkalischen pH-Werten.

Als Amine der Formel (9) bzw. der Formel (11) kommen z.B. in Betracht:

2-Amino-1-hydroxybenzol, 2-Amino-1-methoxybenzol, Anthranilsäure, 4-oder 5-Sulfonamido-anthranilsäure, 5-Sulfoanthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5-methyl- und 5-benzylsulfon, 2-Amino-1-hydroxybenzol-4-methyl-, -äthyl-, -chlor-methyl- und -butylsulfon, 6-Chlor-, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-methoxybenzol-4-sulfanilid, 2-Amino-1-hydroxybenzol-4-(β-methoxyäthylsulfamid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5- oder -6-sulfonsäureamid, 4- oder 5-Chloranisidin, 4- oder 5-Nitroanisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-Chlor-4-sulfo-2-amino-1-hydroxybenzol, 5-Nitro-4-sulfo-2-amino-1-Hydroxybenzol, 4-Nitro-6-sulfo-2-amino-2-hydroxybenzol, 6-Nitro-4-sulfo-2-amino-1-hydroxybenzol, 4-Nitro-6-acetylamino-2-amino-1-hydroxybenzol, 4-Acetylamino-2-amino-1-hydroxybenzol, 4-Nitro-6-sulfo-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2′-Carboxyphenyl)sulfamid, 2-Amino-1-hydroxybenzol-5-methylsulfon, 1-Amino-2-hydroxy-4-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin, 1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin, 2-Amino-1-hydroxy-4,8-disulfonaphthalin.

Die Kupplungskomponenten der Formel (12) können sich z.B. von folgenden Gruppen von Kupplungskomponenten ableiten:

– In o-Stellung zur OH-Gruppe kuppelnde Naphthole, die gegebenenfalls mit Halogen, insbesondere Chlor, Amino, Acylamino, insbesondere Acetylamino, Acyl, wie Acetyl, $C_1$-$C_4$-Alkyl, $C_1$-$C_4$-Alkoxy, Sulfonamido-, N-mono- oder N,N-disubstituierten Sulfonamidogruppen, Sulfo- und Sulfongruppen substituiert sind.

– In o-Stellung zur Aminogruppe kuppelnde Naphthylamine, die gegebenenfalls mit Halogen, insbesondere Brom, $C_1$-$C_4$-Alkyl, $C_1$-$C_4$-Alkoxy, Sulfonamido-, Sulfo- oder Sulfongruppen substituiert sind.

– 5-Pyrazolone oder 5-Aminopyrozole, die in 1-Stellung einen gegebenenfalls mit Halogen, wie z.B. Chlor, Nitro, $C_1$-$C_4$-Alkyl-und Alkoxygruppen, Sulfonamido-, N-alkylierten oder N-alkoxyalkylierten Sulfonamidogruppen, Sulfo oder Sulfongruppen und insbesondere Aminogruppen substituierten Phenyl- oder Naphthylrest besitzen.

– 2,6-Dihydroxy-3-cyano- oder -3-carbonamido-4-alkylpyridine und 6-Hydroxy-2-pyridone, die in 1-Stellung durch gegebenenfalls substituiertes $C_1$-$C_4$-Alkyl, z.B. Methyl, Isopropyl, β-Hydroxyäthyl, β-Aminoäthyl, γ-Isopropoxypropyl oder durch $-NH_2$ oder eine substituierte Aminogruppe wie z.B. Dimethylamino oder Diäthylamino substituiert sind, in 3-Stellung eine Cyano- oder Carbonamidogruppe und in 4-Stellung eine $C_1$-$C_4$-Alkylgruppe, insbesondere Methyl, tragen.

– Acetessigsäureanilide und Benzoylessigsäureanilide, die im Anilidkern gegebenenfalls mit $C_1$-$C_4$-Alkyl-, $C_1$-$C_4$-Alkoxy-, $C_1$-$C_4$-Alkylsulfonylgruppen, $C_1$-$C_4$-Hydroxyalkyl-, $C_1$-$C_4$--Alkoxyalkyl- oder $C_1$-$C_4$-Cyanalylsulfonylgruppen, Sulfonamido-, N-alkylierten oder N-alkoxyalkylierten Sulfonamidogruppen, Sulfo, Acetylamino und Halogen substituiert sein können.

– Phenole, die mit niedrigmolekularen Acylaminogruppen, wie Acetylamino, und/oder mit 1 bis 5 Kohlenstoffatome enthaltenden Alkylgruppen substituiert sind und in o-Stellung kuppeln, sowie Hydroxyphenole, insbesondere Resorcin.

– Chinolone, wie z.B. Chinol-2-one insbesondere 1-$C_1$-$C_4$-Alkyl-4-hydroxy-chinol-2-on.

Im allgemeinen können die genannten Kupplungskomponenten die in Azofarbstoffen üblichen Substituenten enthalten.

Beispiele solcher Kupplungskomponenten sind:

2-Naphthol, 1-Naphthol, 1-Hydroxynaphthalin-4- oder -5- oder -8-sulfonsäure oder -3,6- oder -4,8-disulfonsäure, 1,3- oder 1,5-Dihydroxynaphthalin, 1-Hydroxy-7-aminonaphthalin-3-sulfonsäure, 2-Naphthol-6-sulfonamid, 1-Hydroxy-7-amino oder -7-N-methyl- oder N-acetylaminonaphthalin-3-sulfonsäure, 2-Naphthol-6-β-hydroxyäthylsulfon, 1-Hydroxy-6-amino- oder-6-N-Methyl- oder -6-N-Acetylaminonephthalin-3-sulfonsäure, 1-Hydroxy-7-aminonaphthalin-3,6-disulfonsäure, 1-Hydroxy-6-aminonaphthalin-3,5-disulfonsäure, 1-Acetylamino-7-naphthol, 1-Hydroxy-6-N-(4′-aminophenyl)aminonaphthalin-3-sulfonsäure, 1-Hydroxy-5-aminonaphthalin-3-sulfonsäure, 1-Propionylamino-7-naphthol, 2-Hydroxy-6-aminonaphthalin-4-sulfonsäure, 1-Carbomethoxyamino-7-naphthol, 1-Hydroxy-8-aminonaphthalin-5-sulfonsäure, 1-Carboäthoxy-amino-7-naphthol, 1-Hydroxy-8-aminonaphthalin-5,7-disulfonsäure, 1-Carbopropoxy-amino-7-naphthol, 1-Hydroxy-8-aminonaphthalin-3-sulfonsäure, 1-Dimethylaminosulfonylamino-7-naphthol, 6- oder 8-Acetylamino-2-naphthol, 1-Hydroxy-8-amino-naphthalin-3,5- oder -3,6-disulfonsäure, 4-Acetylamino-2-naphthol, 2-Hydroxy-5-aminonaphthalin-4,7-disulfonsäure, 4-Methoxy-1-naphthol, 4-Acetylamino-1-naphthol, 1-Naphthol-3-, -4-, -5- oder -8-sulfonamid, 2-Naphthol-3-, -4-, -5-, -6-, -7- oder -8-sulfonamid, 5,8-Dichlor-1-naphthol, 5-Chlor-1-naphthol, 2-Naphthylamin, 2-Naphthylamin-1- oder -5- oder -6-sulfonsäure, 2-Aminonaphthalin-5-, -6- oder -7-sulfonamid, 2-Aminonaphthalin-6-sulfonsäure-N-methyl-, -äthyl-, -isopropyl-, -β-oxyäthyl- oder -γ-methoxypropylamid, 2-Aminonaphthalin-6-sulfanilid, 2-Aminoaphthalin-6-sulfonsäure-N-methylanilid, 1-Aminonaphthalin-3-, -4- oder -5-sulfonamid, 1-Aminonaphthalin-5-methyl- oder -äthylsulfon, 5,8-Dichlor-1-aminonaphthalin, 2-Phenylaminonaphthalin, 2-N-Methylaminonaphthalin, 2-N-Aethylaminonaphthalin, 2-Phenylaminonaphthalin-5-, -6- oder -7-sulfonamid, 6-Methyl-2-aminonaphthalin, 6-Brom-2-amino-naphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2′-, 3′- oder 4′-Methylphenyl)-3-methyl-5-pyrazolon, 1-[3′- oder 4′-(β-Hydroxyäthylsulfonyl) phenyl]-3-methyl-5-pyrazolon, 1-(2′-Methoxyphenyl)-3-methyl-5- pyrazolon, 1-(2′-, 3′- oder 4′-Chlorphenyl)-3-methyl-5-pyrazolon, 1-(2′-, 3′- oder 4′-Nitrophenyl)-3-methyl-5-pyrazolon, 1-(2′,5′-oder 3′,4′-Dichlorphenyl)-3-methyl-5-pyrazolon, 1-(2′-, 3′- oder 4′-Sulfamoylphenyl)-3-methyl-5-pyrazolon, 1-(2′-, 3′- oder 4′-Methylsulfonylphenyl)-3-methyl-5-pyrazolon, 2,6-Dihydroxy-3-cyano-4-methylpyridin, 1-Methyl-3-cyano-4-äthyl-6-hydroxypyridon-(2), 1-Amino-3-cyano-4-methyl-6-hydroxypyridon-(2), 1-Phenyl-3-carbonamido-4-methyl-6-hydroxypyridon-(2), Acetoacetanilid, Acetoacet-o-, -m- oder -p-sulfonanilid, Acetoacet-4-(β-hydroxyäthylsulfonyl)anilid, Acetoacet-o-anisidid, Acetoacetnaphthylamid, Acetoacet-o-toluidid, Acetoacet-o-chloranilid, Acetoacet-m- oder -p-chloranilid, Acetoacetanilid-3- oder -4-sulfonamid, Acetoacet-3- oder -4-aminoanilid, Acetoacet-m-xylidid, Benzoylessigsäureanilid, 4-Methylphenol, 3-Dialkylaminophenol, besonders 3-Dimethylamino- und 3-Diäthylaminophenol, 4-t-Butylphenol, 4-t-Amylphenol, 2- oder 3-Acetylamino-4-methylphenol, 2-Methoxycarbonylamino-4-methylphenol, 2-Aethoxycarbonylamino-4-methylphenol, Resorcin, 3,4-Dimethylphenol und 2,4-Dimethylphenol, 3-Amino-4-sulfophenol, 1-(4′-Aminophenyl)-3-methyl-5-pyrazolon, 1-(2′-, 3′- oder -4′-sulfophenyl)-3-methyl-5-pyrazolon, 1-(2′-Chlor-4′- oder -5′-sulfophenyl)-3-methyl-5-pyrazolon, 1-(2-Methyl-6′-chlorphenyl)-3-methyl-5-pyrazolon, 1-(2′-Methyl-4′-sulfophenyl)-3-methyl-5-pyrazolon, 1-(2′-, 3′- oder 4′-Chlor- oder Methyl- oder Sulfophenyl)-3-carboxy-5-pyrazolon, 1-[5′-sulfonaphthyl(2′)]-3-methyl-5-pyrazolon, 1-[4″-Amino-2′,2″-disulfostilben-(4′)]-3-methyl-5-pyrazolon, 1-Aethyl-3-cyano-4-methyl-6-hydroxypyridon-(2), 1-Aethyl-3-sulfomethyl-4-methyl-6-hydroxypyridon-(2), 2,6-Dihydroxy-3-cyano-4-sulfomethylpyridin, 2,4,6-Trihydroxypyrimidin, 1-Methyl-4-hydroxychinol-2-on.

Für die Herstellung der Azomethinfarbstoffe der Formel (1) werden in bekannter Weise die oben genannten aromatischen Amine der Formel (9) mit den Verbindungen der Formeln

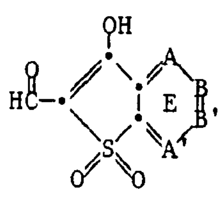 (13), 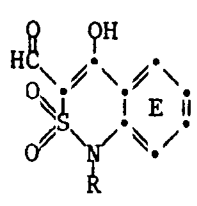 (14) oder 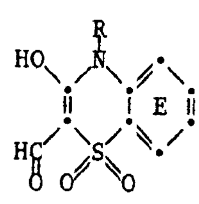 (15)

die durch Formylierung der Verbindungen der Formeln

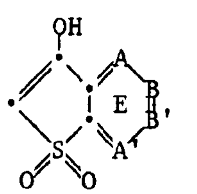 (16), 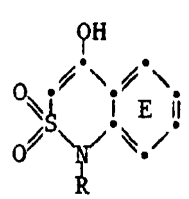 (17) oder 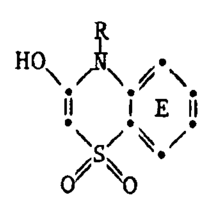 (18)

in an sich bekannter Weise erhältlich sind, umgesetzt, wobei A, A′, B und B′, R und E die unter den Formeln (2), (3) und (4) angegebenen Bedeutungen haben.

Als Kupplungskomponenten der Formel (10) kommen z.B. in Betracht: Benzthiophen-3-on-1,1-dioxid, 5-Nitrobenzthiophen-3-on-1,1-dioxid, 5-Aminobenzthiophen-3-on-1,1-dioxid, 5-Acetylaminobenzthiophen-3-on-1,1-dioxid, 6-Chlorbenzthiophen-3-on-1,1-dioxid, Naphthothiophen-3-on-1,1-dioxid sowie 3-Oxo-4-hydroxy-5-(äthyl, isopropyl, isobutyl oder methylthioäthyl)-7-methyl- (oder -7-butyl-) -2,3-dihydrothieno[2,3-]-pyridin-1,1-dioxid;

2,1-Benzthiazin-4-on-2,2-dioxid, N-Methyl-2,1-benzthiazin-4-on-2,2-dioxid, N-Acetyl-2,1-benzthiazin-4-on-2,2-dioxid, 6-Brom-2,1-benzthiazin-4-on-2,2-dioxid, 6-Brom-N-methylbenzthiazin-4-on-2,2-dioxid;

1,4-Benzthiazin-3-on-1,1-dioxid, 7-Nitro-1,4-benzthiazin-3-on-1,1-dioxid, 7-Sulfo-1,4-benzthiazin-3-on-1,1-dioxid, 6,7-Dimethoxy-1,4-benzthiazin-3-on-1,1-dioxid, 7-Methyl-1,4-benzthiazin-3-on-1,1-dioxid, 7-Nitro-N-Methyl-1,4-benzthiazin-3-on-1,1-dioxid, N-β-Hydroxyäthyl-1,4-benzthiazin-3-on-1,1-dioxid, 7-Amino-, 7-Sulfamoyl- oder 7-Chlorsulfonyl- oder 7-Carboxymethylsulfonyl- oder 7-Acetylamino-oder 7-Phenylazo-1,4-benzthiazin-3-on-1,1-dioxid, 7-Amino-6- phenylazo-1,4-benzthiazin-3-on-1,1-dioxid, 6-Amino-7-methyl-1,4-benzthiazin-3-on-1,1-dioxid, 8-Chlor- oder 8-Nitro-N-β-hydroxyethyl-oder -N-γ-hydroxypropyl-1,4-benzthiazin-3-on-1,1-dioxid, 6-Sulfamoyl-1,4-benzthiazin-3-on-1,1-dioxid, 7-Chlor-6-sulfamoyl-1,4-benzthiazin-3-on-1,1-dioxid, N-γ-Hydroxypropyl-1,4-benzthiazin-3-on-1,1-dioxid, N-Benzyl-1,4-benzthiazin-3-on1,1-dioxid, 6-Amino-1,4-benzthiazin-3-on-1,1-dioxid, 6-Trifluormethyl-1,4-benzthiazin-3-on-1,1-dioxid, 6-Chlor-1,4-benzthiazin-3-on-1,1-dioxid.

Verbindungen der Formel (10) sind z.B. bekannt aus: DE-B-1 219 146; Journal of Organic Chemistry in USSR 20 (1984), 2032 ff; Chem. Ber. 98 (1965), 36 ff; Journal of Heterocyclic Chemistry 4 (1967), 403; Friedländer 11, 378; Chem. Ber. 45 (1912), 747 ff; US-A-2 186 629; Journal of Heterocyclic Chemistry 16 (1979), 1503.

Gegebenenfalls kann eine freie Aminogruppe im Rest D bzw. $D_1$ und/oder K bzw. $K_1$ nach der Kupplung mit einem Acylierungs- oder Alkylierungsmittel in eine Acylamino- oder Alkylaminogruppe umgewandelt werden, und ebenso dann eine Hydroxygruppe im Rest D und/oder K bzw. $D_1$ und/oder $K_1$ durch Alkylierung oder Acylierung in eine Alkoxy- oder Acylgruppe übergeführt werden.

Eine Verfahrensvariante zur Herstellung der Schwermetallkomplexazomethinfarbstoffe ist dadurch gekennzeichnet, dass man ein ein Schwermetallatom abgebendes Mittel statt mit dem Azomethin der Formel (1) auch mit einem Gemisch des Amins der Formel (9) und einem Aldehyd der Formel (13), (14) oder (15) herstellen kann.

Die Amine der Formel (9) und/oder (11), die Kupplungskomponenten der Formel (10) und/oder (12) und die o-Hydroxyaldehyde können in Aminogruppen überführbare Reste, wie z.B. die Acetylamino- und die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluss an die Herstellung der Farbstoffe der Formel (1) oder die Herstellung der Schwermetallkomplexe.

Für die Herstellung der Azomethinfarbstoffe der Formel (8) werden in bekannter Weise die oben genannten aromatischen Amine der Formel (9) mit o-Hydroxybenzaldehyden oder o-Hydroxynaphthaldehyden kondensiert.

Geeignete Aldehyde sind beispielsweise:
2-Hydroxybenzaldeyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor-5-nitro-2-hydroxybenzaldehyd, 4-Methoxy-2-hydroxybenzaldehyd, 1-Hydroxy-2-naphthaldehyd und dessen in 4-Stellung chlorierter Abkömmling; und 2-Hydroxy-1-naphthaldehyd.

Die Herstellung der 1:1-Chromkomplexe geschieht nach an sich bekannten Methoden. Man stellt z.B. den 1:1-Chromkomplex der Verbindung der Formel (1) her, indem man die metallfreie Verbindung in saurem Medium mit einem Salz des dreiwertigen Chroms wie Chromchlorid, Chromfluorid, Chromacetat, Chromformiat oder Chromsulfat umsetzt, gegebenenfalls in Anwesenheit von löslichkeitsfördernden oder die Chromierung beschleunigenden Mitteln, wie z.B. Alkoholen, Alkanolaminen oder Hydroxycarbonsäuren. Anschliessend lässt man gewünschtenfalls den 1:1-Komplex bei pH-Werten von 5-11 mit einer Verbindung, welche den Rest der Formel (1) oder (8) einführt, reagieren.

Die erfindungsgemässen Schwermetallkomplexe von Azo- oder Azomethinfarbstoffen der Formel (1) eignen sich zum Färben von stickstoffgruppenhaltigen oder hydroxygruppenhaltigen Fasermaterialien, insbesondere textilen Fasermaterialien aus Cellulose, Seide und insbesondere Wolle und synthetischen Polyamiden sowie Leder. Man erhält egale Färbungen in gelben, braunen, orangen, roten, blauen, grauen, grünen und schwarzen Tönen mit guten Allgemeinechtheiten, insbesondere sehr guter Reib-, Nass-, Nassreib- und Lichtechtheit. Ferner sind die erfindungsgemässen Farbstoffe sehr gut mit anderen Säurefarbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

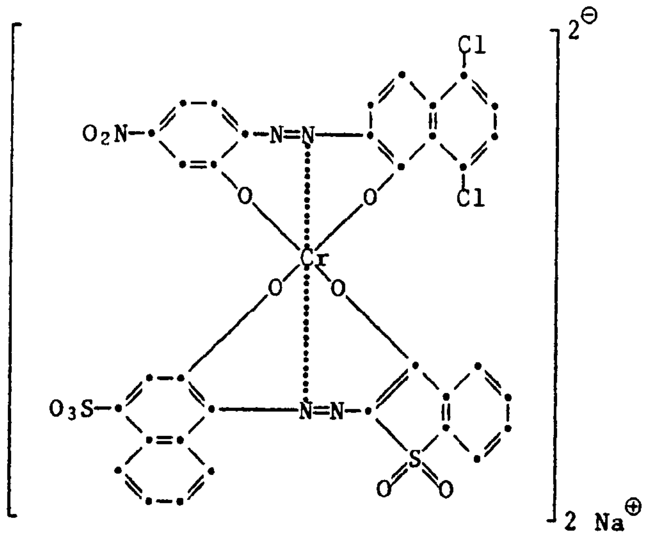

(101)

a) Kupplung

9,56 Teile Benzthiophen-3-on-1,1-dioxid werden in 250 Teilen Wasser und 10 Teilen 5N NaOH bei 50-60°C und pH = 8,5-9,5 gelöst. Unter Kühlung werden während 15 Minuten bei 10-15°C und konstantem pH = 8,5-9,5 12,5 Teile 1-Diazonium-2-naphthol-4-sulfonat eingetragen. Nach beendeter Kupplung wird Kochsalz zugesetzt, bei pH = 6,5-7 filtriert und mit Kochsalzlösung gewaschen. Nach Trocknung bei 60-70°C im Vakuum werden 28,9 Teile eines orange-roten Azofarbstoffes erhalten.

b) Metallisierung zum 1:1-Chromkomplex

9,09 Teile dieses Azofarbstoffes werden in 40 Teilen 1,2-Dihydroxyethan mit 5,60 Teilen $CrCl_3 \cdot 6\ H_2O$ während 4 Stunden auf 120-130°C erhitzt. Die Reaktionslösung wird nach Abkühlen bei Raumtemperatur auf 25 % Kochsalzlösung ausgetragen und mit Natriumacetat auf pH = 5 gestellt. Der Farbstoff kristallisiert aus, wird filtriert, mit Kochsalzlösung gewaschen und bei 60-70°C getrocknet; es werden 12,9 Teile 1:1-Komplex erhalten, der Wolle in echten blauen Tönen färbt.

c) Metallisierung zum asymmetrischen 1:2-Chromkomplex

2,41 Teile 1:1-Komplex und 1,89 Teile Azofarbstoff der Formel

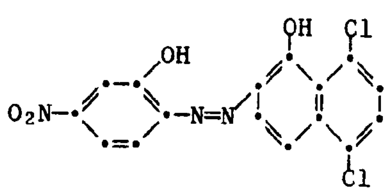

werden in 50 Teilen Wasser bei pH = 7-8 während 2 Stunden bei 95-100°C gehalten. Nach Zugabe von Salzsäure wird bei pH = 6,5-7 Kochsalz zugegeben, filtriert und mit Kochsalzlösung gewaschen. Nach Trocknung

bei 60-70°C im Vakuum werden 4,85 Teile Farbstoff der oben angegebenen Formel (101) erhalten, der Wolle und Polyamid in echten blauen Tönen färbt.

Wenn man wie in Beispiel 1 angegeben verfährt, jedoch anstelle des in Abschnitt c) angegebenen Azofarbstoffes eine äquimolare Menge des Azofarbstoffes der Formel

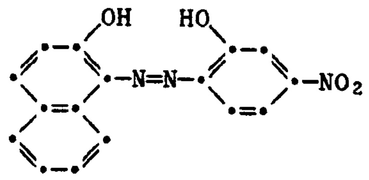

verwendet, erhält man den Farbstoff der Formel (102),

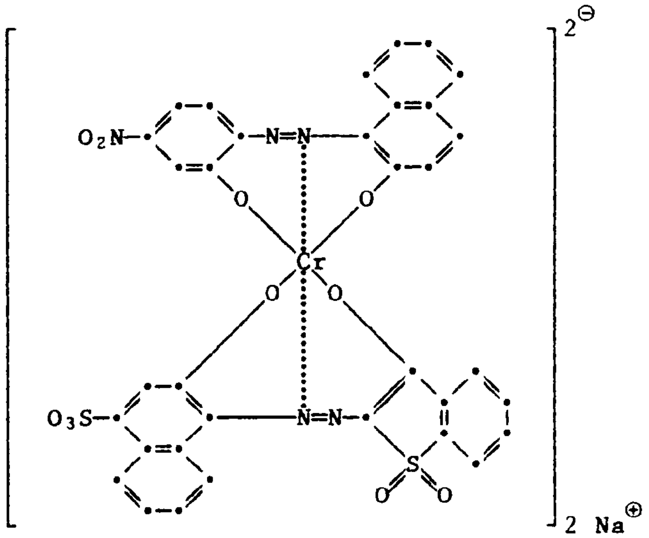

(102)

der Wolle und Polyamid in echten blauen Tönen färbt.

Wenn man wie in Beispiel 1 angegeben verfährt, jedoch anstelle des in Abschnitt a) angegebenen 1-Diazonium-2-naphthol-4-sulfonats eine äquimolare Menge des Diazoniumsalzes eines der in der folgenden Tabelle 1 in Spalte 2 angegebenen Amine verwendet, erhält man Azofarbstoffe, die nach Metallisierung zum 1:1-Chromkomplex wie in Abschnitt b) in Beispiel 1 angegeben, Wolle in dem in Spalte 3 angegebenen Farbton anfärben.

Tabelle 1:

| Beispiel | Amin | Farbton |
|---|---|---|
| 2 | 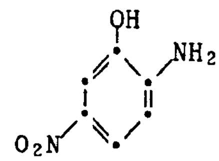 | rot-violett |
| 3 | 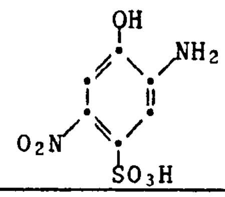 | violett |
| 4 | 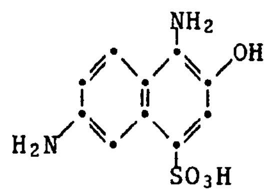 | grünstichig blau |
| 5 | 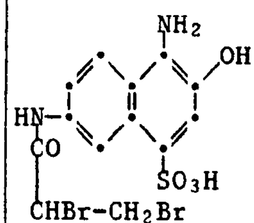 | grünstichig blau |
| 6 | 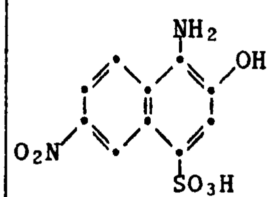 | marineblau |
| 7 | 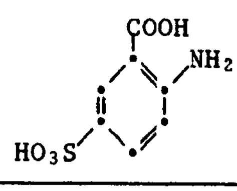 | gelb |

Setzt man den 1:1-Chromkomplex aus Tabelle 1, Beispiel 6, gemäss den Angaben von Abschnitt c) des Beispiels 1 zum 1:2-Chromkomplex um, und verwendet anstelle des dort angegebenen Azofarbstoffes eine äquimolare Menge des Azofarbstoffes der Formel

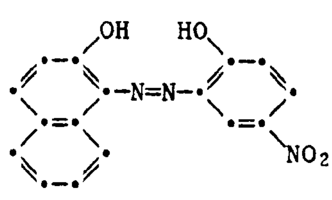

oder des Azofarbstoffes der Formel

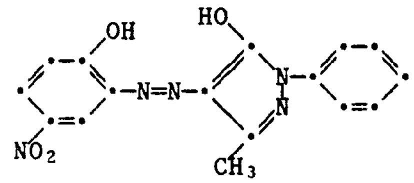

so erhält man entweder den Farbstoff der Formel (103),

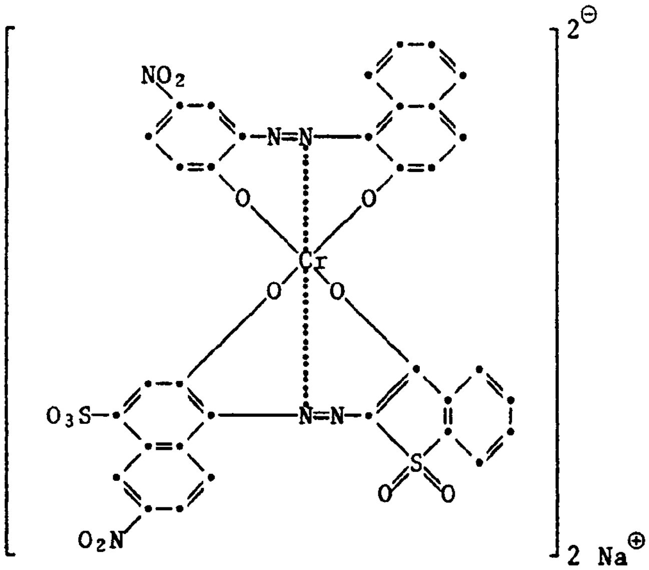

(103)

der Wolle und Polyamid in echten grauen Tönen färbt, oder den Farbstoff der Formel (104),

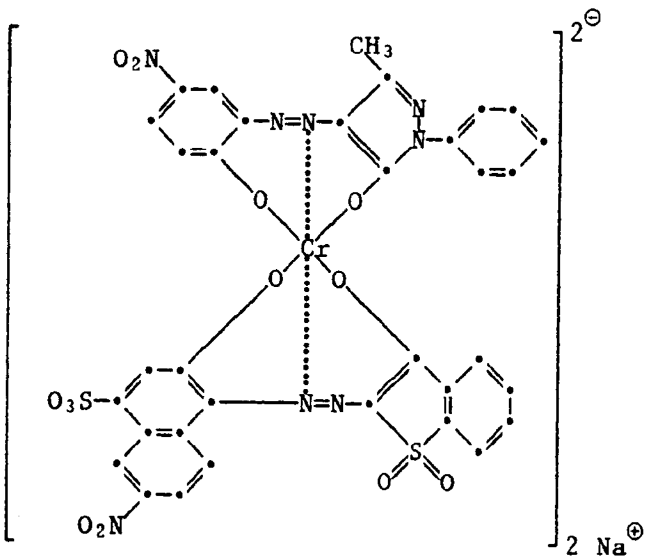

(104)

der Wolle und Polyamid in echten braunen Tönen färbt.

Wenn man wie in Beispiel 1 angegeben verfährt, jedoch im Abschnitt a) als Diazokomponente einen äquimolaren Teil 5-Nitro-1,2-benzochinondiazid verwendet, erhält man einen Azofarbstoff, der nach Metallisierung wie im Abschnitt b) beschrieben, den 1:1-Chromkomplex ergibt.

Dieser 1:1-Chromkomplex wird wie im Abschnitt c) beschrieben mit einer äquimolaren Menge des Azofarbstoffes der Formel

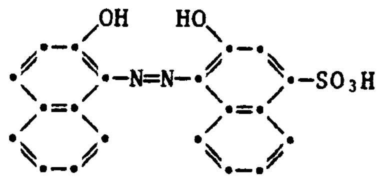

oder des Azofarbstoffes der Formel

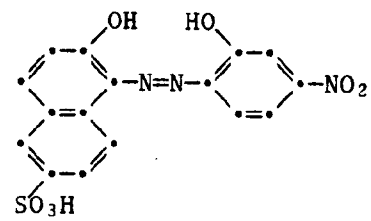

umgesetzt und man erhält entweder den Farbstoff der Formel (105),

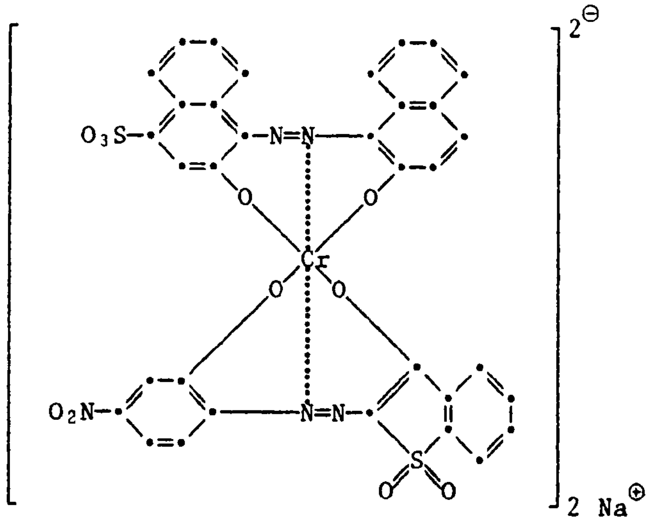

(105)

der Wolle oder Polyamid in echten marineblauen Tönen färbt, oder den Farbstoff der Formel (106),

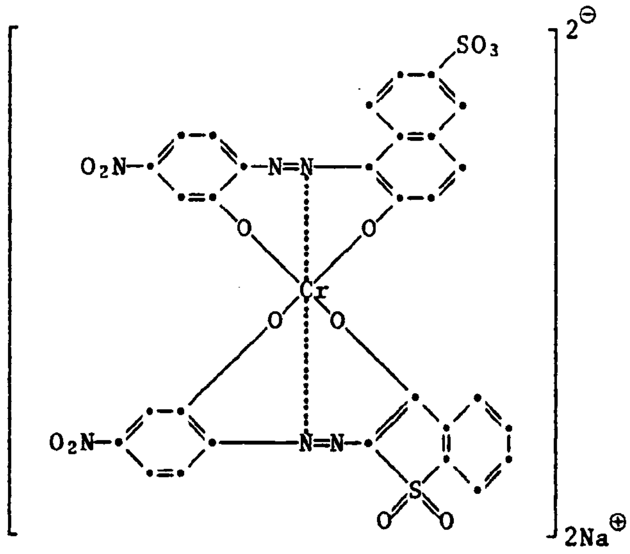

(106)

der Wolle und Polyamid in echten marineblauen Tönen färbt.

Beispiel 8

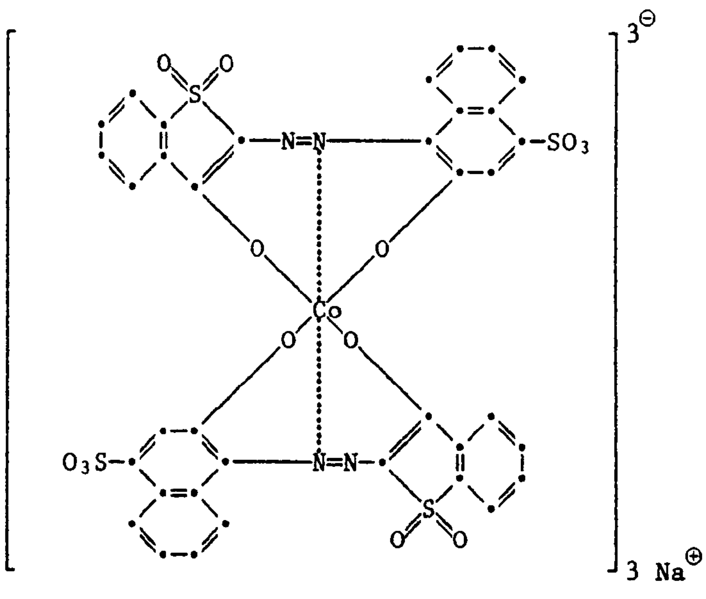

(107)

9,56 Teile Benzthiophen-3-on-1,1-dioxid werden in 250 Teilen Wasser und 10 Teilen 5N NaOH bei 50-60°C und pH = 8,5-9,5 gelöst. Unter Kühlung werden während 15 Minuten bei 10-15°C und konstantem pH = 8,5-9,5 12,5 Teile 1-Diazonium-2-naphthol-4-sulfonat eingetragen. Nach beendeter Kupplung wird Kochsalz zugesetzt, bei pH = 6,5-7 filtriert und mit Kochsalzlösung gewaschen. Nach Trocknung bei 60-70°C im Vakuum werden 28,9 Teile eines orange-roten Azofarbstoffes erhalten.

2,27 Teile dieses Azofarbstoffes werden in 50 Teilen Wasser bei einem pH-Wert von 8 bis 9 mit 2,5 Teilen einer 1 molaren $C_0SO_4$-Lösung während 30 Minuten auf 80° bis 90°C erwärmt. Nach Erkalten wird die Reaktionslösung auf einen pH-Wert von 7 bis 7,5 gestellt und eingedampft. Man erhält 3,4 Teile des Farbstoffes der Formel (107), der Wolle und Polyamid in echten violetten Tönen färbt.

Wenn man wie in Beispiel 8 angegeben verfährt und anstelle von 1-Diazonium-2-naphthol-4-sulfonat eine äquimolare Menge des Diazoniumsalzes eines der in der folgenden Tabelle 2 in Spalte 2 angegebenen Amine verwendet, so erhält man bei sonst gleicher Verfahrensweise symmetrische 1:2-Kobaltkomplexfarbstoffe, die Wolle und Polyamid in dem in Spalte 3 angegebenen Farbton anfärben.

Tabelle 2

| Beispiel | Amin | Farbton |
|---|---|---|
| 9 | 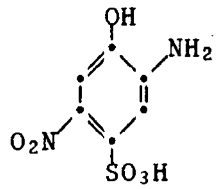 | rot |
| 10 | 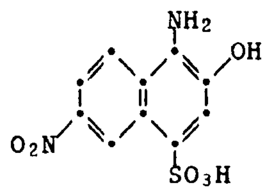 | bordeaux |
| 11 | 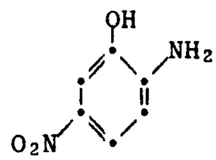 | purpur |
| 12 | 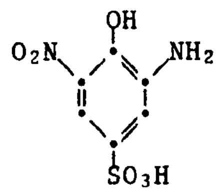 | violett |
| 13 | 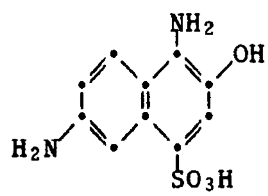 | blau |
| 14 | 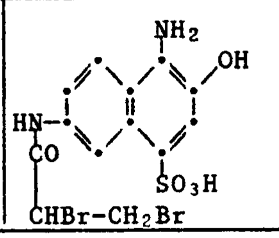 | rot-stichig blau |

| Beispiel | Amin | Farbton |
|---|---|---|
| 15 | 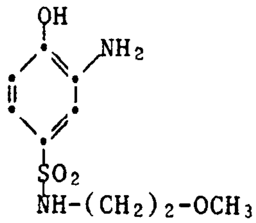 | bordeaux |
| 16 | 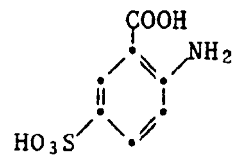 | gelb |

Beispiel 17

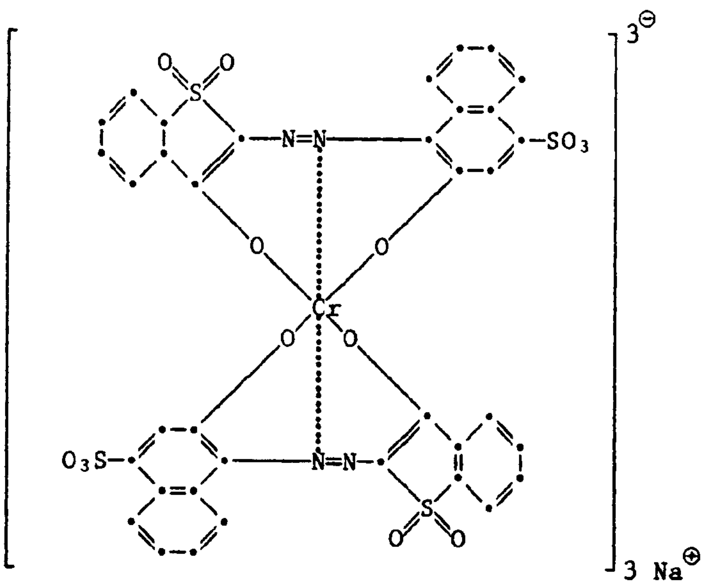

(108)

9,56 Teile Benzthiophen-3-on-1,1-dioxid werden in 250 Teilen Wasser und 10 Teilen 5N NaOH bei 50-60°C und pH = 8,5-9,5 gelöst. Unter Kühlung werden während 15 Minuten bei 10-15°C und konstantem pH = 8,5-9,5 12,5 Teile 1-Diazonium-2-naphthol-4-sulfonat eingetragen. Nach beendeter Kupplung wird Kochsalz zugesetzt, bei pH = 6,5-7 filtriert und mit Kochsalzlösung gewaschen. Nach Trocknung bei 60-70°C im Vakuum werden 28,9 Teile eines orange-roten Azofarbstoffes erhalten.

2,27 Teile dieses Azofarbstoffes werden in 50 Teilen Wasser und 6,2 Teilen einer 0,41 molaren Natriumchromsalicylat-Lösung bei einem pH-Wert von 8 bis 9 auf 95° bis 100°C erwärmt. Nach Eindampfen der Reaktionslösung erhält man 4,6 Teile des Farbstoffes der Formel (108), der Wolle und Polyamid in echten blauen Tönen färbt.

Wenn man wie in Beispiel 17 angegeben verfährt, und anstelle von 1-Diazonium-2-naphthol-4-sulfonat eine äquimolare Menge eines Diazoniumsalzes der in der folgenden Tabelle 3 in Spalte 2 angegebenen Amine verwendet, so erhält man bei sonst gleicher Verfahrensweise symmetrische 1:2-Chromkomplexfarbstoffe, die Wolle und Polyamid in dem in Spalte 3 angegebenen Farbton anfärben.

Tabelle 3:

| Beispiel | Amin | Farbton |
|---|---|---|
| 18 | 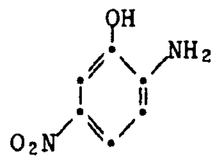 | lila-violett |
| 19 | 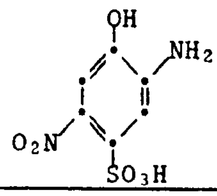 | violett |
| 20 | 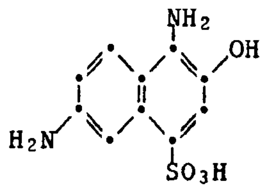 | grün-stichig blau |
| 21 | 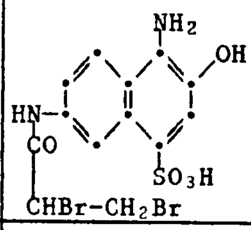 | grau |
| 22 | 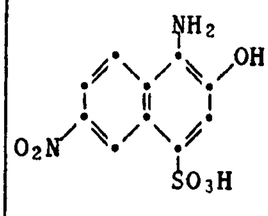 | grau |
| 23 | 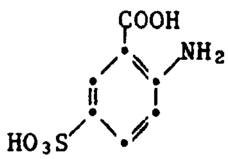 | gelb |
| 24 | 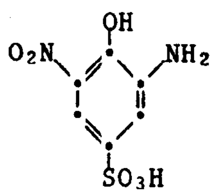 | violett |

Beispiel 25

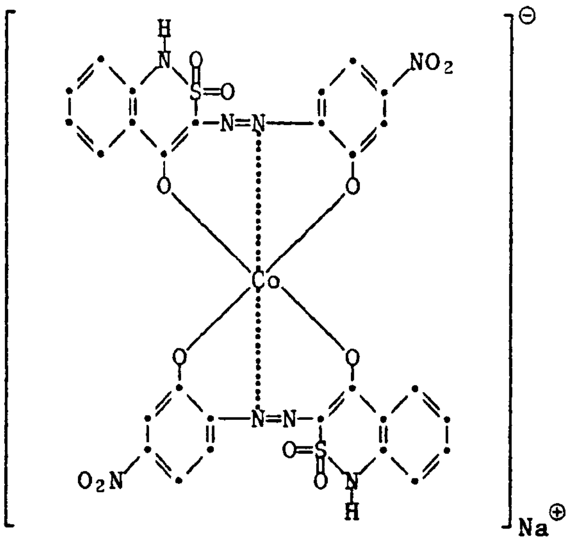

(109)

1,54 Teile 2-Amino-5-nitrophenol werden diazotiert und zu einer Lösung von 2,17 Teilen 2,1-Benzthiazin-4-on-2,2-dioxid in 20 Teilen Wasser bei pH = 9 und 10-15°C getropft. Nach beendeter Kupplung wird Kochsalz zugesetzt und filtriert. Nach Waschen mit Kochsalzlösung und Trocknung bei 60-70°C im Vakuum werden 5,45 Teile eines roten Azofarbstoffes erhalten.

1,09 Teile dieses Azofarbstoffes werden in 40 Teilen Wasser bei pH = 8-9 gelöst und bei 70-80°C innert 15 Minuten mit 16 Teilen einer 0,1 molaren $C_0SO_4$-Lösung versetzt. Nach beendeter Komplexierung wird Kochsalz zugegeben, bei pH = 7-7,5 filtriert und mit Kochsalzlösung gewaschen. Nach Trocknung bei 60-70°C im Vakuum, werden 1,6 Teile eines bordeaux-roten Farbstoffes der oben angegebenen Formel (109) erhalten, der Wolle und Polyamid in echten violetten Tönen färbt.

Wenn man wie in Beispiel 25 angegeben verfährt, und anstelle von 2-Amino-5-nitrophenol eine äquimolare Menge 2-Amino-4-sulfo-6-nitrophenol verwendet, so erhält man bei sonst gleicher Verfahrensweise einen symmetrischen 1:2-Kobaltkomplexfarbstoff, der Wolle und Polyamid in echten bordeaux Tönen anfärbt.

Beispiel 26

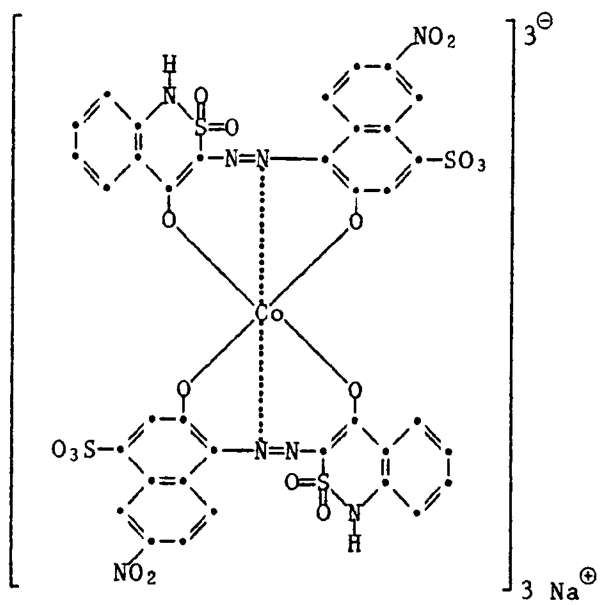

(110)

2,07 Teile 2,1-Benzthiazin-4-on-2,2-dioxid werden in 40 Teilen Wasser unter Zusatz von Natronlauge bei einem pH-Wert von 7 bis 8 gelöst. Nach Abkühlen auf 10°C werden 2 Teile Calciumhydroxid und 2,95 Teile 1-Diazonium-6-nitro-2-naphthol-4-sulfonat eingetragen. Nach beendeter Kupplung bei einem pH-Wert von 11

bis 12 wird Calcium entfernt, bei einem pH-Wert von 5 bis 6 Natriumchlorid zugesetzt, filtriert und mit Natriumchlorid-Lösung gewaschen. Nach Trocknung im Vakuum bei 60° bis 70°C werden 3,0 Teile eines roten Azofarbstoffes erhalten.

0,52 Teile dieses Azofarbstoffes werden in 40 Teilen Wasser bei pH = 8-9 gelöst und bei 70-80°C innert 15 Minuten mit 6 Teilen einer 0,1 molaren $C_0SO_4$-Lösung versetzt. Nach beendeter Komplexierung wird die Reaktionslösung auf einen pH-Wert von 7 bis 7,5 gestellt und eingedampft. Man erhält 1,1 Teile bordeaux-roter Farbstoff der oben angegebenen Formel (110), der Wolle und Polyamid in echten bordeaux Tönen färbt.

Beispiel 27

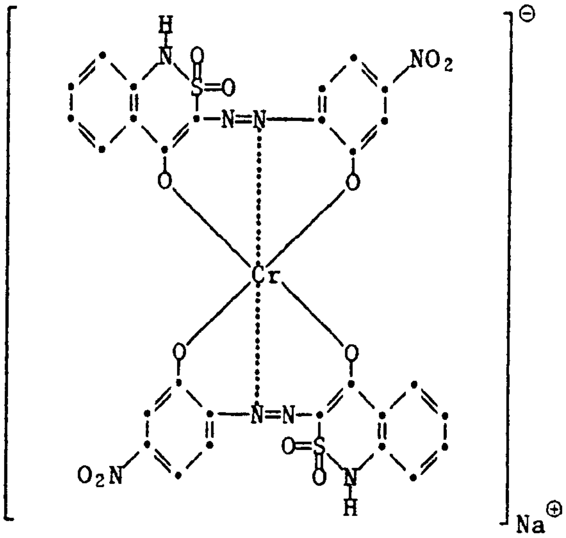

(111)

1,54 Teile 2-Amino-5-nitrophenol werden diazotiert und zu einer Lösung von 2,17 Teilen 2,1-Benzthiazin-4-on-2,2-dioxid in 20 Teilen Wasser bei pH = 9 und 10-15°C getropft. Nach beendeter Kupplung wird Kochsalz zugesetzt und filtriert. Nach Waschen mit Kochsalzlösung und Trocknung bei 60-70°C im Vakuum werden 5,45 Teile eines roten Azofarbstoffes erhalten.

1,09 Teile dieses Azofarbstoffes werden in 40 Teilen Wasser unter Zusatz von Natronlauge bei einem pH-Wert von 8 gelöst und mit 4,2 Teilen einer 0,395 molaren Natriumchromsalicylat-Lösung 2 Stunden unter Rückfluss erhitzt. Anschliessend stellt man die Reaktionslösung auf einen pH-Wert von 7 bis 7,5, salzt mit Natriumchlorid aus, filtriert, wäscht mit Natriumchlorid-Lösung und trocknet das Reaktionsprodukt im Vakuum bei 60° bis 70°C. Man erhält 1,23 Teile des Farbstoffes der Formel (111), der Wolle und Polyamid in echten blauen Tönen färbt.

Wenn man wie in Beispiel 27 angegeben verfährt, jedoch anstelle von 2-Amino-5-nitrophenol eine äquimolare Menge eines der in der folgenden Tabelle 4 in Spalte 2 angegebenen Amine verwendet, so erhält man bei sonst gleicher Verfahrensweise symmetrische 1:2-Chromkomplexfarbstoffe, die Wolle und Polyamid in dem in Spalte 3 angegebenen Farbton anfärben.

Tabelle 4

| Beispiel | Amin | Farbton |
|---|---|---|
| 28 | 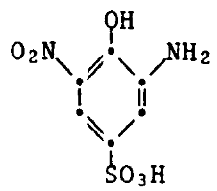 | violett |
| 29 | 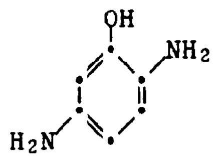 | blaugrau |
| 30 | 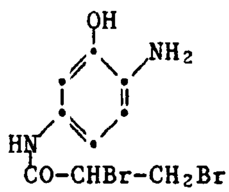 | grau |

Beispiel 31

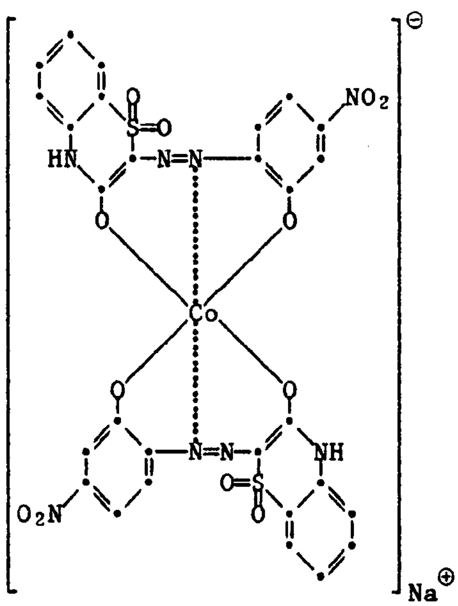

(112)

1,54 Teile 2-Amino-5-nitrophenol werden diazotiert und zu einer Suspension von 2,07 Teilen 1,4-Benzthiazin-3-on-1,1-dioxid in 25 Teilen Wasser und 0,8 Teilen 2N Natronlauge bei 10°C innert 15 Minuten getropft. Der pH-Wert dabei bei 9 bis 11 gehalten. Nach beendeter Kupplung wird der pH mit Salzsäure auf 7-7,5 gesenkt. Der orange-rote Farbstoff wird abfiltriert und mit Kochsalzlösung gewaschen. Nach Trocknung bei 60-70°C im Vakuum werden 2,68 Teile eines Azofarbstoffes erhalten.

1,09 Teile dieses Azofarbstoffs werden in 40 Teilen Wasser bei 70-80°C gelöst und mit 18 Teilen 0,1 molarer $C_0SO_4$-Lösung versetzt; der pH-Wert wird dabei mit Soda bei 9 gehalten. Der Farbstoff wird durch Zugabe von Kochsalz bei 60°C ausgefällt, abfiltriert und mit Kochsalzlösung gewaschen.

Nach Trocknung bei 60-70°C im Vakuum werden 1,02 Teile Farbstoff der oben angegebenen Formel (112) erhalten, der Wolle und Polyamid in echten roten Tönen färbt.

Wenn man wie in Beispiel 31 angegeben verfährt, und anstelle von 2-Amino-5-nitrophenol eine äquimolare Menge eines der in der folgenden Tabelle 5 in Spalte 2 angegebenen Amine verwendet und anstelle von 1,4-Benzthiazin-3-on-1,1-dioxid eine äquimolare Menge einer der in Spalte 3 angegebenen Kupplungskomponente, so erhält man bei sonst gleicher Verfahrensweise symmetrische 1:2-Kobaltkomplexfarbstoffe, die Wolle und Polyamid in dem in Spalte 4 angegebenen Farbton anfärben.

Tabelle 5

| Beispiel | Amin | Kupplungskomponente | Farbton |
|---|---|---|---|
| 32 | 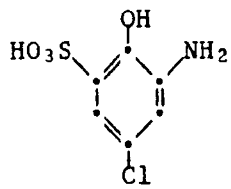 | 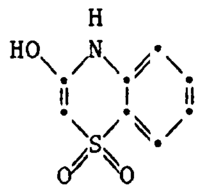 | orange |
| 33 | 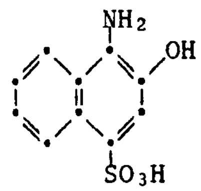 | 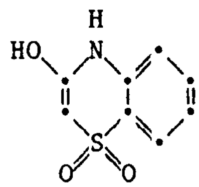 | rot |
| 34 | 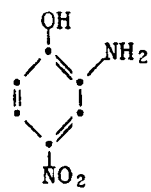 | 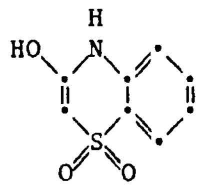 | braun-orange |
| 35 | 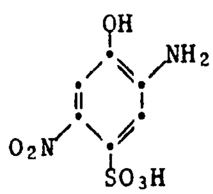 | 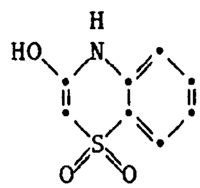 | orange |
| 36 | 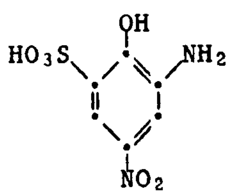 | 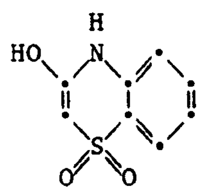 | orange |
| 37 | 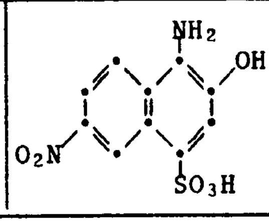 | 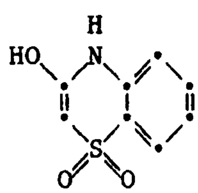 | orange |

| Beispiel | Amin | Kupplungskomponente | Farbton |
|---|---|---|---|
| 38 | 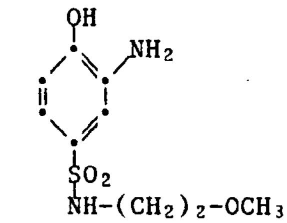 | 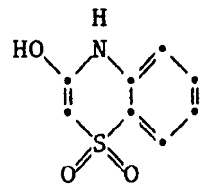 | orange |
| 39 | 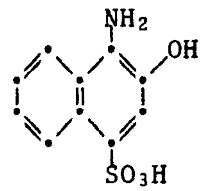 | 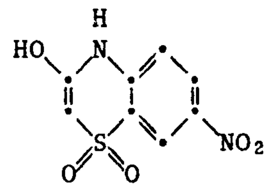 | oliv |
| 40 | 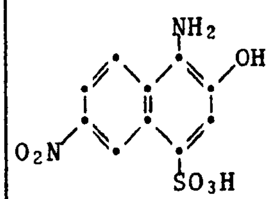 | 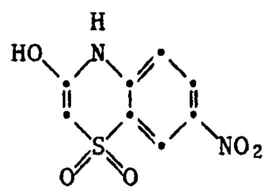 | orange |
| 41 | 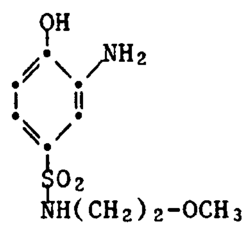 | 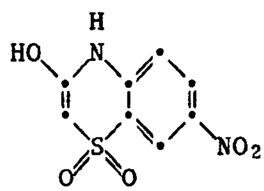 | orange |
| 42 | 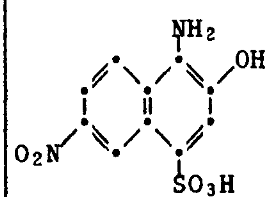 | 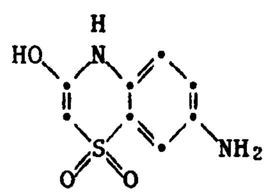 | orange |
| 43 | 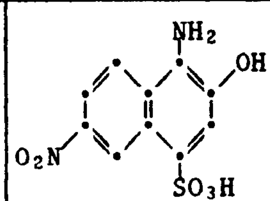 | 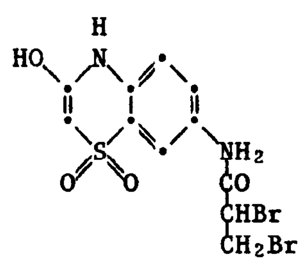 | orange |

| Beispiel | Amin | Kupplungskomponente | Farbton |
|---|---|---|---|
| 44 | 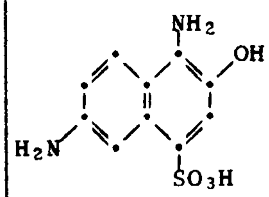 | 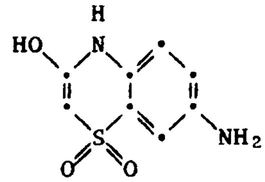 | bordeaux |
| 45 | 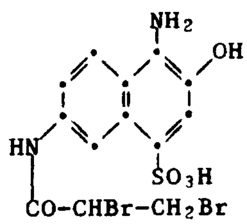 | 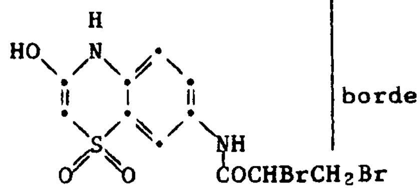 | bordeaux |
| 46 | 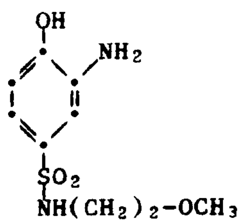 | 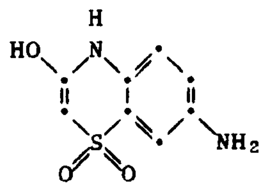 | orange |
| 47 | 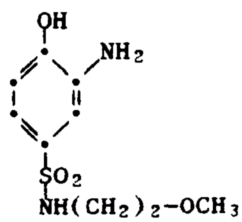 | 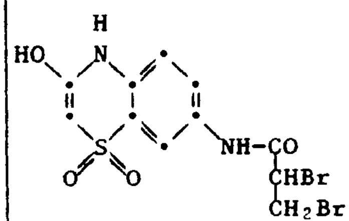 | orange |
| 48 | 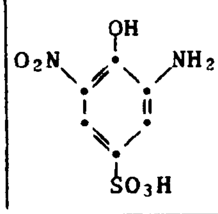 | 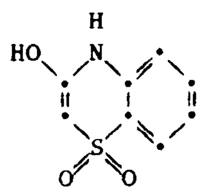 | orange |

Beispiel 49

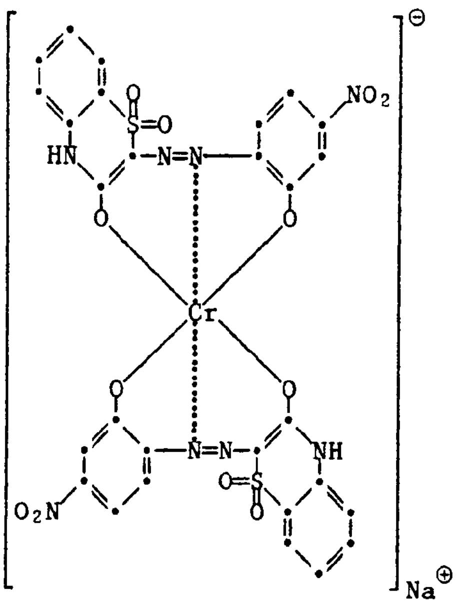

(113)

1,54 Teile 2-Amino-5-nitrophenol werden diazotiert und zu einer Suspension von 2,07 Teilen 1,4-Benzthiazin-3-on-1,1-dioxid in 25 Teilen Wasser und 0,8 Teilen 2N Natronlauge bei 10°C innert 15 Minuten getropft. Der pH-Wert wird dabei bei 9 bis 11 gehalten. Nach beendeter Kupplung wird der pH mit Salzsäure auf 7-7,5 gesenkt. Der orange-rote Farbstoff wird abfiltriert und mit Kochsalzlösung gewaschen. Nach Trocknung bei 60-70°C im Vakuum werden 2,68 Teile eines Azofarbstoffes erhalten.

1,09 Teile dieses Azofarbstoffes werden in 40 Teilen Wasser unter Zusatz von Natriumcarbonat-Lösung bei einem pH-Wert von 8 bis 9 suspendiert und mit 4,2 Teilen einer 0,395 molaren Natriumchromsalicylat-Lösung bei 95° bis 100°C komplexiert. Nach beendeter Umsetzung wird Natriumchlorid zum Aussalzen zugesetzt, bei einem pH-Wert von 7 bis 7,5 filtriert, mit Natriumchlorid-Lösung gewaschen und dann im Vakuum bei 60° bis 70°C getrocknet. Es werden 1,4 Teile des Farbstoffes der Formel (113) erhalten, der Wolle und Polyamid in echten roten Tönen färbt.

Wenn man wie in Beispiel 49 angegeben verfährt, und anstelle von 2-Amino-5-nitrophenol eine äquimolare Menge eines der in der folgenden Tabelle 6 in Spalte 2 angegebenen Amine verwendet und anstelle von 1,4-Benzthiazin-3-on-1,1-dioxid eine äquimolare Menge einer der in Spalte 3 angegebenen Kupplungskomponenten, so erhält man bei sonst gleicher Verfahrensweise symmetrische 1:2-Chromkomplexfarbstoffe, die Wolle und Polyamid in dem in Spalte 4 angegebenen Farbton anfärben.

Tabelle 6

| Beispiel | Amin | Kupplungskomponente | Farbton |
|---|---|---|---|
| 50 | 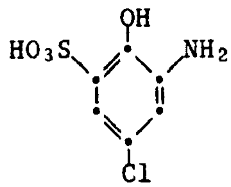 | 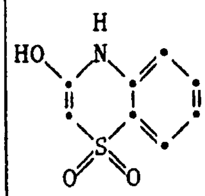 | rot |
| 51 | 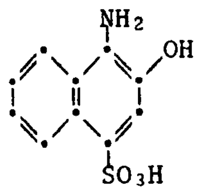 | 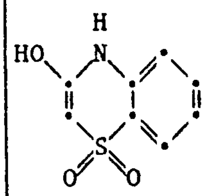 | bordeaux |
| 52 | 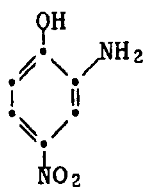 | 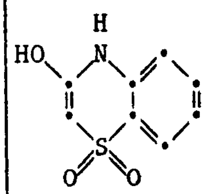 | orange |
| 53 | 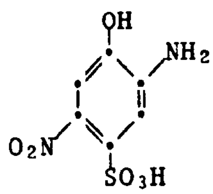 | 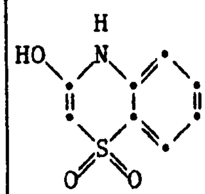 | orange |
| 54 | 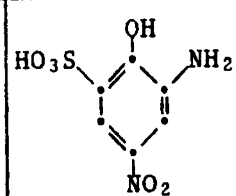 | 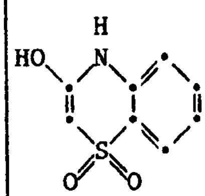 | orange |
| 55 | 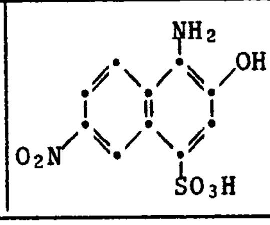 | 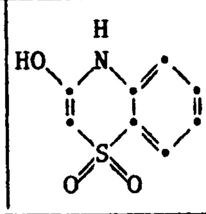 | rot |

| Beispiel | Amin | Kupplungskomponente | Farbton |
|---|---|---|---|
| 56 | 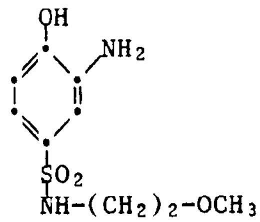 | 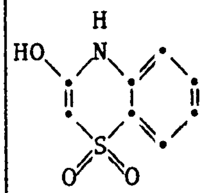 | orange |
| 57 | 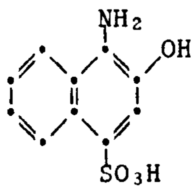 | 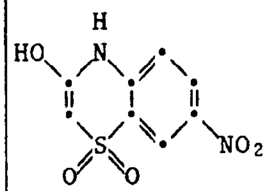 | orange |
| 58 | 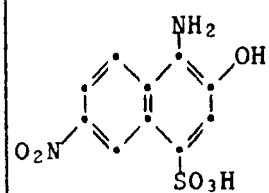 | 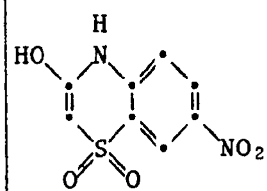 | rot |
| 59 | 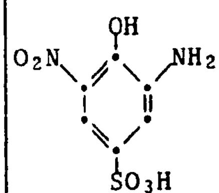 | 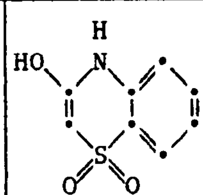 | orange |
| 60 | 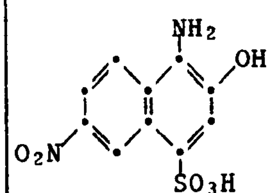 | 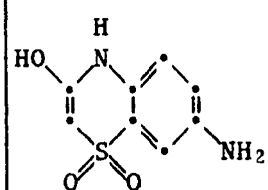 | rot |
| 61 | 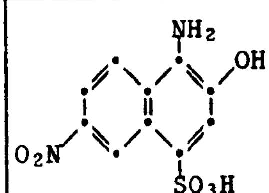 | 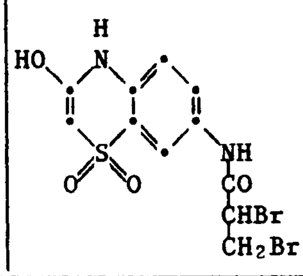 | bordeaux |

| Beispiel | Amin | Kupplungskomponente | Farbton |
|---|---|---|---|
| 62 | 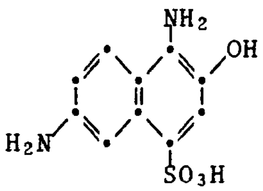 | 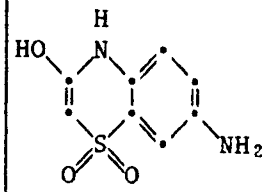 | violett |
| 63 | 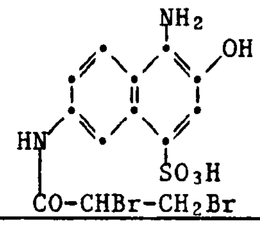 | 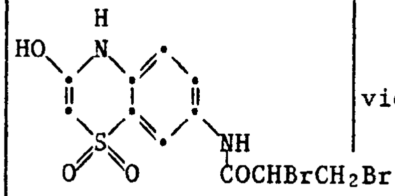 | violett |

Beispiel 64

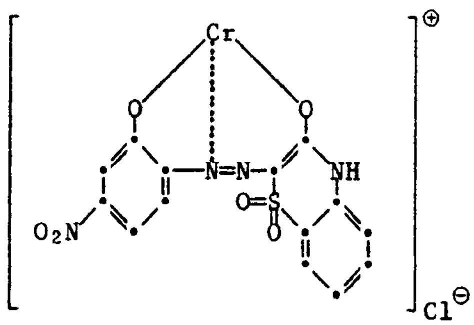

(114)

1,54 Teile 2-Amino-5-nitrophenol werden diazotiert und zu einer Suspension von 2,07 Teilen 1,4-Benzthiazin-3-on-1,1-dioxid in 25 Teilen Wasser und 0,8 Teilen 2N Natronlauge bei 10°C innert 15 Minuten getropft. Der pH-Wert wird dabei bei 9 bis 11 gehalten. Nach beendeter Kupplung wird der pH mit Salzsäure auf 7-7,5 gesenkt. Der orange-rote Farbstoff wird abfiltriert und mit Kochsalzlösung gewaschen. Nach Trocknung bei 60-70°C im Vakuum werden 2,68 Teile eines Azofarbstoffes erhalten.

1,09 Teile dieses Azofarbstoffes werden in 25 Teilen 1,2-Dihydroxyethan mit 0,84 Teilen $CrCl_3 \cdot 6H_2O$ während 4 Stunden auf 120° bis 130°C erhitzt. Nach Abkühlen auf Raumtemperatur wird die Reaktions lösung auf 25%-iger Natriumchlorid-Lösung ausgetragen, filtriert und mit Natriumchlorid-Lösung gewaschen. Nach Trocknen im Vakuum bei 60° bis 70°C erhält man 0,783 Teile des roten 1:1-Chromkomplexfarbstoffes der Formel (114), der Wolle in roten Tönen anfärbt.

Wenn man wie in dem Beispiel 64 angegeben verfährt, jedoch anstelle von diazotiertem 2-Amino-5-nitrophenol eine äquimolare Menge 1-Diazonium-2-naphthol-4-sulfonat verwendet, so erhält man bei sonst gleicher Verfahrensweise einen bordeaux-roten Farbstoff, der Wolle in bordeaux Tönen anfärbt.

Zur Herstellung der faserreaktiven Metallkomplexe der Beispiele 5, 14, 21, 30, 43, 45, 47, 61 und 63 werden die Metallkomplexe mit freier Aminogruppe hergestellt und anschliessend mit α,β-Dibrompropionylchlorid gemäss folgender Weise umgesetzt:

Nach der Metallisierung wird die Lösung auf ca. 10 bis 15° gekühlt und der pH auf einen Wert zwischen 7 und 7,5 eingestellt. Dann lässt man innerhalb von 10 bis 15 Minuten α,β-Dibrompropionylchlorid in der Menge zutropfen, dass ein 10%-iger Ueberschuss vorliegt, wobei der pH-Wert mit verdünnter Natronlauge stets zwischen 6,5 und 7,5 gehalten wird. Anschliessend lässt man noch eine Stunde bei 10 bis 15° nachrühren und lässt die Temperatur dann auf Raumtemperatur steigen. Der acylierte Farbstoff wird durch Zugabe von Natriumchlorid abgeschieden, mit wässriger Natriumchlorid-Lösung gewaschen und bei 50 bis 60° im Vakuumtrockenschrank getrocknet.

Färbebeispiel 1

100 Teile Wollstrickgarn werden in ein Färbebad eingebracht, welches aus 4500 Teilen Wasser von 40°C, 3 Teilen Ammoniumsulfat und 1 Teil des in Beispiel 26 beschriebenen Farbstoffs besteht. Innerhalb von 45 Minuten wird die Temperatur des Färbebades auf 98°C gesteigert und während einer Stunde eingehalten. Nach Abkühlen wird das Wollgarn gespült und getrocknet. Es ist in einem vollen nass- und lichtechten Bordeauxton gefärbt.

Färbebeispiel 2

In ein Färbebad, welches aus 4500 Teilen Wasser von 40°C, 3 Teilen Ammoniumsulfat und 1 Teil des in Beispiel 25 genannten Farbstoffs besteht, wird mit 100 Teilen eines Gewebes aus Nylon-6,6-Texturfasern eingegangen. Das Färbebad wird innerhalb von 45 Minuten zum Sieden erhitzt und 1 Stunde am Kochen erhalten. Nach Abkühlen, Spülen und Trocknen erhält man ein violett gefärbtes Substrat mit guten Nassechtheiten und guter Lichtechtheit.

Färbebeispiel 3

In ein Färbebad, das auf 4 500 Teile vollentsalztes Wasser 1 Teil des in Beispiel 33 erwähnten Chromkomplexes, 1 Teil Ammoniumacetat und soviel an 40%-iger Essigsäure enthält, dass der pH-Wert 4,5 erreicht ist, wird bei einer Temperatur von 40°C mit 100 Teilen Texturgewebe aus Nylon-6,6 eingegangen. Das Färbebad wird innerhalb von 45 Minuten zum Kochen erhitzt, worauf eine Stunde bei Kochtemperatur gefärbt wird. Nach Abkühlen, gründlichem Spülen und Trocknen ist das Polyamidgewebe in einem gleichmässigen, nass- und lichtechten Rot gefärbt.

Färbebeispiel 4

100 Teile Wollstrickgarn werden in ein Färbebad eingebracht, welches aus 4500 Teilen Wasser von 40°C, 0,5 Teile Essigsäure (80 %) und 1 Teil des in Beispiel 31 beschriebenen Farbstoffes besteht. Innerhalb von 45 Minuten wird die Temperatur des Färbebades auf 98°C gesteigert und noch 1 Stunde eingehalten. Nach Abkühlen wird das Wollstrickgarn warm und kalt gespült und getrocknet. Es ist in einem vollen Rotton gefärbt.

Färbebeispiel 5

100 Teile Wollstrickgarn werden in ein Färbebad eingebracht, welches aus 4500 Teilen Wasser von 40°C, 0,5 Teile Essigsäure (80 %) und 1 Teil des in Beispiel 1 beschriebenen Farbstoffs besteht. Innerhalb von 45 Minuten wird die Temperatur des Färbebades auf 98°C gesteigert und während einer Stunde eingehalten. Nach Abkühlen wird das Wollgarn gespült und getrocknet. Es ist in einem vollen, nass-und lichtechten Blauton gefärbt.

Färbebeispiel 6

100 Teile Wollstrickgarn werden in ein Färbebad eingebracht, welches aus 4500 Teilen Wasser von 40°C, 5 Teilen Natriumsulfat, 4 Teilen Schwefelsäure (96 %) und 1 Teil des in Beispiel 1 in Abschnitt b) beschriebenen 1:1-Chromkomplexfarbstoffs besteht. Innerhalb von 40 Minuten wird die Temperatur des Färbebades auf 98°C gesteigert und während 90 Minuten eingehalten. Nach Abkühlen wird das Wollgarn gespült und getrocknet. Es ist in einem vollen, nass- und lichtechten Blauton gefärbt.

Färbebeispiel 7

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30 % Hexadecylamin, 25 % Octadecylamin und 45 % Octadecenylamin und 7 Mol Aethylenoxid) sowie 4 Teile Ammoniumsulfat gelöst.

3 Teile des gemäss Beispiel 61 in Tabelle 6 erhaltenen Farbstoffes werden in 100 Teilen Wasser heiss gelöst und dem obigen Färbebad zugegeben. Ein Zirkulationsfärbeapparat wird mit 100 Teilen vorgenetztem Kammzug in Wickelform beschickt und im Verlaufe von 30 Minuten die Temperatur des Bades von 50 auf 97-99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit

heissem und kaltem Wasser, Absäuern mit 1 Teil 80%iger Ameisensäure, Zentrifugieren und Trocknen erhält man ein rot gefärbtes Färbegut von sehr guter Nassechtheit sowie ausgezeichneter Lichtechtheit.

## Patentansprüche

1. Schwermetallkomplexe von Azo- oder Azomethinfarbstoffen der Formel

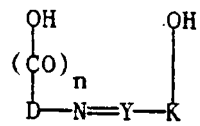 (1)

worin D der Rest einer Diazokomponente der Benzol-, Naphthalin- oder heterocyclischen Reihe ist, K-OH der Rest der Formel

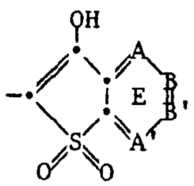 (2), 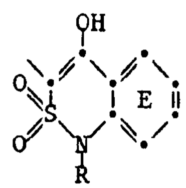 (3) oder 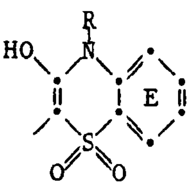 (4)

ist, worin die Symbole A, A′, B und B′ je ein Kohlenstoffatom bedeuten, oder worin eines der Symbole A, A′, B oder B′ ein Stickstoffatom und die übrigen je ein Kohlenstoffatom bedeuten, R Wasserstoff, gegebenenfalls substituiertes $C_1$-$C_4$-Alkyl oder gegebenenfalls substituiertes Phenyl ist und der Ring E noch weiter substituiert sein kann, Y ein Stickstoffatom oder eine CH-Gruppe und n=0 oder 1 ist, und worin $-(CO)_n$—OH in Nachbarstellung zu -N=Y- an D gebunden ist.

2. Schwermetallkomplexe gemäss Anspruch 1, die als Schwermetall ein Kupfer-, Nickel-, Eisen-, Kobalt- oder Chromatom enthalten.

3. Schwermetallkomplexe gemäss Anspruch 2, worin zwei Moleküle des Azo- oder Azomethinfarbstoffes der Formel (1) an ein Atom Nickel oder Kobalt gebunden sind.

4. Schwermetallkomplexe gemäss Anspruch 2, worin ein oder zwei Moleküle des Azo- oder Azomethinfarbstoffes der Formel (1) an ein Atom Chrom gebunden ist (sind).

5. Schwermetallkomplexe gemäss Anspruch 1, worin ein Molekül des Azo- oder Azomethinfarbstoffes der Formel (1) und ein Molekül einer anderen metallisierbaren Azo- oder Azomethinverbindung an ein Atom Chrom gebunden sind.

6. Schwermetallkomplexe gemäss einem der Ansprüche 1 bis 5, worin Y ein Stickstoffatom ist.

7. Schwermetallkomplexe gemäss einem der Ansprüche 1 bis 6 worin die Symbole A, A′, B und B′ je ein Kohlenstoffatom bedeuten.

8. Schwermetallkomplexe gemäss einem der Ansprüche 1 bis 6, worin A, A′ und B je ein Kohlenstoffatom und B′ ein Stickstoffatom bedeuten.

9. Schwermetallkomplexe gemäss einem der Ansprüche 1 bis 8, worin der Azo- oder Azomethinfarbstoff der Formel (1) keine, eine oder zwei Sulfonsäuregruppen enthält.

10. Schwermetallkomplexe gemäss Anspruch 6 von Azofarbstoffen der Formel

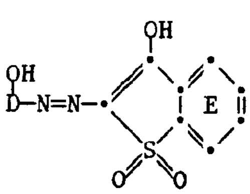 (5), 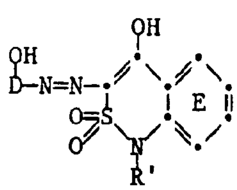 (6) oder 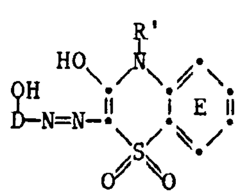 (7)

worin D ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Pheny-

lamino, $C_1$-$C_4$-Alkoxycarbonyl, Nitro, Cyano, Trifluormethyl, Halogen, Sulfamoyl, durch $C_1$-$C_4$-Alkyl oder $C_1$-$C_4$-Alkoxy-$C_1$-$C_4$-Alkyl substituiertes Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Phenyl- oder Naphthylrest ist, oder worin D-OH ein gegebenenfalls durch die angegebenen Substituenten substituierten Carboxyphenylrest ist, R′ Wasserstoff oder $C_1$-$C_4$-Alkyl ist, und der Benzolring E substituiert sein kann durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfo, fasserreaktive Reste und Phenylazogruppen, und worin die Hydroxygruppe in D in o-Position zu der Azogruppe steht.

11. Schwermetallkomplexe gemäss Anspruch 10, die als Schwermetall ein Kobalt- oder Chromatom enthalten.

12. Schwermetallkomplexe gemäss Anspruch 11, worin zwei Moleküle des Azofarbstoffes der Formel (5), (6) oder (7) an ein Atom Kobalt gebunden sind.

13. Schwermetallkomplexe gemäss Anspruch 11, worin ein Molekül des Azofarbstoffes der Formel (5), (6) oder (7) und ein Molekül des Farbstoffes der Formel

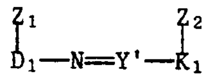

(8),

worin $D_1$ der Rest einer Diazokomponente der Benzol- oder Naphthalinreihe oder der heterocyclischen Reihe, $K_1$ der Rest einer Kupplungskomponente der Benzol-, Naphthalin- oder heterocyclischen Reihe oder einer Ketomethylenverbindung, Y′ ein Stickstoffatom oder die CH-Gruppe, $Z_1$ in o-Stellung -N=Y′- eine -OH oder -COOH oder -$NH_2$-Gruppe und $Z_2$ die -OH oder -NH(R) Gruppe ist, wobei R Wasserstoff, gegebenenfalls substituiertes $C_1$-$C_4$-Alkyl oder gegebenenfalls substituiertes Phenyl ist, und $Z_2$ in Nachbarstellung zu -N=Y′- an $K_1$ gebunden ist, an ein Chromatom gebunden sind.

14. Schwermetallkomplexe gemäss Anspruch 13, worin $D_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstofffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfo, faserreaktive Reste und Phenylazogruppen substituierter Phenyl- oder Naphthylrest ist, und $K_1$ ein gegebenenfalls durch $C_1$-$C_4$-Alkyl, $C_1$-$C_4$-Alkoxy, $C_2$-$C_6$-Alkanoylamino, $C_1$-$C_6$-Alkoxycarbonylamino, Benzoylamino, Amino, Mono- oder Dialkylamino mit je 1 bis 4 Kohlenstoffatomen im Alkylrest, Phenylamino, $C_1$-$C_4$-Alkoxycarbonyl, Nitro, Cyano, Trifluormethyl, Halogen, Sulfamoyl, Carbamoyl, Ureido, Hydroxy, $C_1$-$C_4$-Alkylsulfonyl, Carboxy, Sulfomethyl, Sulfomethyl, Sulfo, fasserreaktive Reste und Phenylazogruppen substituierter Rest einer Kupplungskomponente der Benzol- oder Naphthalinreihe oder der 5-Pyrazolon-, 5-Aminopyrazol-, Chinolin-, Acetoacetarylid- oder Benzoylessigsäurearylid-Reihe ist, und Y′ ein Stickstoffatom bedeutet.

15. Schwermetallkomplexe gemäss Anspruch 11, worin zwei Moleküle der Formel (5), (6) oder (7), worin D-OH ein 2-Hydroxy-4-nitrophenyl-1-, 2-Hydroxy-5-nitrophenyl-1-, 2-Hydroxy-4-nitro-5-sulfophenyl-1-, 2-Hydroxy-3-sulfo-5-nitro-phenyl-1-, 2-Hydroxy-3-nitro-5-sulfophenyl-1-, 2-Hydroxy-3-sulfo-5-chlorphenyl-1-, 2-Hydroxy-4-sulfonaphthyl-1-, 2-Hydroxy-4-sulfo-6-nitronaphthyl-1-, 2-Hydroxy-4-sulfo-6-aminonaphthyl-1-, 2-Hydroxy-4-sulfo-6-($\alpha$,$\beta$-dibrompropionylamino)naphthyl-1-, 2-Hydroxy-5-(b-methoxyäthylaminosulfonyl) phenyl-1-, 2-Hydroxy-4-aminophenyl-1-, 2-Hydroxy-4-($\alpha$,$\beta$-dibrompropionylamino)phenyl-1- oder 2-Carboxy-4-sulfophenyl-1-Rest ist, und der Benzolring E in Formeln (5) und (6) unsubstituiert ist und in Formel (7) durch Nitro, Amino oder $\alpha$,$\beta$-Dibrompropionylamino substituiert sein kann und R′ Wasserstoff bedeutet, an ein Atom Chrom oder Kobalt gebunden sind.

16. Schwermetallkomplex gemäss Anspruch 13, die ein Molekül des Azofarbstoffes der Formel (5), worin D-OH der 2-Hydroxy-4-sulfonaphthyl-1-, 2-Hydroxy-4-sulfo-6-nitronaphthyl-1- oder 2-Hydroxy-4-nitrophenyl-1-Rest ist und der Benzolring E unsubstituiert ist, und ein Molekül des Azofarbstoffes der Formel (8) gebunden enthalten, worin $D_1$-$Z_1$ der 2-Hydroxy-5-nitrophenyl-1-, 2-Hydroxy-4-sulfonaphthyl-1- oder 2-Hydroxy-4-nitrophenyl-1-Rest und $K_1$-$Z_2$ der 1-Hydroxy-5,8-dichlornaphthyl-2-, 2-Hydroxynaphthyl-1-, 2-Hydroxy-6-sulfonaphthyl-1- oder 1-Phenyl-3-methyl-5-pyrazolon-Rest ist, und Y′ ein Stickstoffatom bedeutet.

17. Schermetallkomplex gemäss Anspruch 11, worin ein Molekül der Formel (5) oder (7), worin D-OH ein 2-Hydroxy-4-nitrophenyl-1-, 2-Hydroxy-4-nitro-5-sulfophenyl-1-, 2-Hydroxy-4-sulfonaphthyl-1-, 2-Hydroxy-4-sulfo-6-nitronaphthyl-1-, 2-Hydroxy-4-sulfo-6-aminonaphthyl-1-, 2-Hydroxy-4-sulfo-6-($\alpha$,$\beta$-dibrompropionylamino)naphthyl-1- oder 2-Carboxy-4-sulfophenyl-1-Rest ist, und der Benzolring E in Formel (5) unsubstituiert ist und in Formel (7) durch Nitro, Amino oder $\alpha$,$\beta$-Dibrompropionylamino substituiert sein kann, und R′ Wasserstoff bedeutet, an ein Atom Chrom gebunden ist.

18. Verfahren zur Herstellung von Schwermetallkomplexen gemäss Anspruch 1, dadurch gekennzeichnet, dass man Azo- oder Azomethinfarbstoffe der Formel (1) mit einem Schwermetall oder einem ein Schwermetall enthaltenden Komplex umsetzt.

19. Verwendung der Schwermetallkomplexe gemäss einem der Ansprüche 1 bis 17 bzw. die gemäss Anspruch 18 erhaltenen Schwermetallkomplexe zum Färben oder Bedrucken.

20. Verwendung gemäss Anspruch 19, zum Färben oder Bedrucken textiler Fasermaterialien aus Cellulose, Wolle, synthetisches Polyamid oder Seide sowie Leder.

## Claims

1. A heavy metal complex of azo or azomethine dyes of the formula

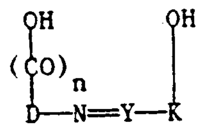 (1)

in which D is the radical of a diazo component of the benzene, naphthalene or heterocyclic series, K-OH is the radical of the formula

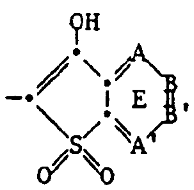 (2), 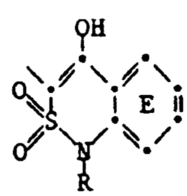 (3) or 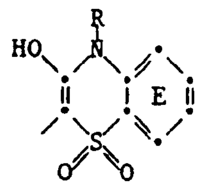 (4)

in which the symbols A, A′, B and B′ each represent a carbon atom or in which one of the symbols A, A′, B or B′ represents a nitrogen atom while the others represent a carbon atom, R is hydrogen, substituted or unsubstituted $C_1$-$C_4$alkyl or substituted or unsubstituted phenyl, and the ring E can be further substituted, Y is a nitrogen atom or a CH group, and n is 0 or 1, and in which $-(CO)_n$ -OH is bonded to D in a position adjacent to -N=Y-.

2. A heavy metal complex according to claim 1, which contains as the heavy metal a copper, nickel, iron, cobalt or chromium atom.

3. A heavy metal complex according to claim 2, wherein two molecules of the azo or azomethine dye of the formula (1) are bonded to one atom of nickel or cobalt.

4. A heavy metal complex according to claim 2, wherein one or two molecules of the azo or azomethine dye of the formula (1) is or are bonded to one atom of chromium.

5. A heavy metal complex according to claim 1, wherein one molecule of the azo or azomethine dye of the formula (1) and one molecule of another metallizable azo or azomethine compound are bonded to one atom of chromium.

6. A heavy metal complex according to any one of claims 1 to 5, wherein Y is a nitrogen atom.

7. A heavy metal complex according to any one of claims 1 to 6, wherein the symbols A, A′, B and B′ each represent a carbon atom.

8. A heavy metal complex according to any one of claims 1 to 6, wherein A, A′ and B are each a carbon atom and B′ is a nitrogen atom.

9. A heavy metal complex according to any one of claims 1 to 8, wherein the azo or azomethine dye of the formula (1) contains no, one or two sulfo groups.

10. A heavy metal complex according to claim 6 of azo dyes of the formula

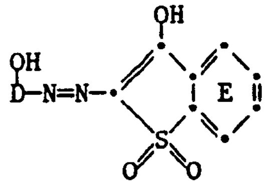 (5), 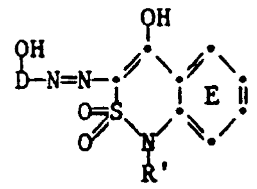 (6) or 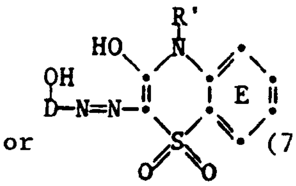 (7)

in which D is a phenyl or naphthyl radical which can be substituted by $C_1$-$C_4$alkyl, $C_1$-$C_4$alkoxy, $C_2$-$C_6$alkanoylamino, $C_1$-$C_6$alkoxycarbonylamino, benzoylamino, amino, mono- or dialkylamino having in each case 1 to 4 carbon atoms in the alkyl radical, phenylamino, $C_1$-$C_4$alkoxycarbonyl, nitro, cyano, trifluoromethyl, halogen, sulfamoyl, $C_1$-$C_4$alkyl- or $C_1$-$C_4$alkoxy-$C_1$-$C_4$alkyl-substituted sulfamoyl, carbamoyl, ureido, hydroxyl $C_1$-$C_4$alkylsulfonyl, carboxyl, sulfomethyl, sulfo, fibre-reactive radicals and phenylazo groups, or D-OH is a carboxyphenyl radical which can be substituted by the abovementioned substituents, R′ is hydrogen or $C_1$-$C_4$alkyl, and the benzo ring E can be substituted by $C_1$-$C_4$alkyl, $C_1$-$C_4$alkoxy, $C_2$-$C_6$alkanoylamino, $C_1$-$C_6$alkoxycarbonylamino, benzoylamino, amino, mono- or dialkylamino having in each case 1 to 4 carbon atoms in the alkyl radical, phenylamino, $C_1$-$C_4$alkoxycarbonyl, nitro, cyano, trifluoromethyl, halogen, sulfamoyl, carbamoyl, ureido, hydroxyl, $C_1$-$C_4$alkylsulfonyl, carboxyl, sulfomethyl, sulfo, fibre-reactive radicals and phenylazo groups, and in which the hydroxyl group in D is in the o-position relative to the azo group.

11. A heavy metal complex according to claim 10, which contains as the heavy metal a cobalt or a chromium atom.

12. A heavy metal complex according to claim 11, wherein two molecules of the azo dye of the formula (5), (6) or (7) are bonded to one atom of cobalt.

13. A heavy metal complex according to claim 11, wherein one molecule of the azo dye of the formula (5), (6) or (7) and one molecule of the azo dye of the formula

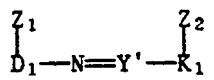

(8)

in which $D_1$ is the radical of a diazo component of the benzene or naphthalene series or of the heterocyclic series, $K_1$ is the radical of a coupling component of the benzene, naphthalene or heterocyclic series or a ketomethylene compound, Y′ is a nitrogen atom or a CH group, $Z_1$ is an -OH or COOH or -$NH_2$ group in the o-position relative to -N=Y′- and $Z_2$ is a -OH or -NH(R) group, R being hydrogen, substituted or unsubstituted $C_1$-$C_4$alkyl or substituted or unsubstituted phenyl, and $Z_2$ is bonded to $K_1$ in a position adjacent to -N=Y′-, are bonded to a chromium atom.

14. A heavy metal complex according to claim 13, wherein $D_1$ is a phenyl or naphthyl radical which can be substituted by $C_1$-$C_4$alkyl, $C_1$-$C_4$alkoxy, $C_2$-$C_6$alkanoylamino, $C_1$-$C_6$alkoxycarbonylamino, benzoylamino, amino, mono- or dialkylamino having in each case 1 to 4 carbon atoms in the alkyl radical, phenylamino, $C_1$-$C_4$alkoxycarbonyl, nitro, cyano, trifluoromethyl, halogen, sulfamoyl, carbamoyl, ureido, hydroxyl, $C_1$-$C_4$alkylsulfonyl, carboxyl, sulfomethyl, sulfo, fibre-reactive radicals and phenylazo groups, $K_1$ is a radical of a coupling component of the benzene or naphthalene series or of the 5-pyrazolone, 5-aminopyrazole, quinoline, acetoacetarylide or benzoylacetarylide series which can be substituted by $C_1$-$C_4$alkyl, $C_1$-$C_4$alkoxy, $C_2$-$C_6$alkanoylamino, $C_1$-$C_6$alkoxycarbonylamino, benzoylamino, amino, mono- or dialkylamino having in each case 1 to 4 carbon atom in the alkyl radical, phenylamino, $C_1$-$C_4$alkoxycarbonyl, nitro, cyano, trifluoromethyl, halogen, sulfamoyl, carbamoyl, ureido, hydroxyl, $C_1$-$C_4$alkylsulfonyl, carboxyl, sulfomethyl, sulfo, fibre-reactive radicals and phenylazo groups, and Y′ is a nitrogen atom.

15. A heavy metal complex according to claim 11, wherein two molecules of the formula (5), (6) or (7) in which D-OH is a 2-hydroxy-4-nitrophen-1-yl, 2-hydroxy-5-nitrophen-1-yl, 2-hydroxy-4-nitro-5-sulfophen-1-yl, 2-hydroxy-3-sulfo-5-nitrophen-1-yl, 2-hydroxy-3-nitro-5-sulfophen-1-yl, 2-hydroxy-3-sulfo-5-chlorophen-1-yl, 2-hydroxy-4-sulfonaphth-1-yl, 2-hydroxy-4-sulfo-6-nitronaphth-1-yl, 2-hydroxy-4-sulfo-6-aminonaphth-1-yl, 2-hydroxy-4-sulfo-6-(α,β-dibromopropionylamino)-naphth-1-yl, 2-hydroxy-5-(β-methoxyethylaminosulfonyl) phen-1-yl, 2-hydroxy-4-aminophen-1-yl, 2-hydroxy-4-(α,β-dibromopropionylamino)-phen-1-yl or 2-carboxy-4-sulfophen-1-yl radical, the benzene ring E in the formulae (5) and (6) is unsubstituted and in the formula (7) can be substituted by nitro, amino or α,β-dibromopropionylamino, and R′ is hydrogen, are bonded to one atom of chromium or cobalt.

16. A heavy metal complex according to claim 13, which contains bonded one molecule of the azo dye of the formula (5) in which D-OH is a 2-hydroxy-4-sulfonaphth-1-yl, 2-hydroxy-4-sulfo-6-nitronaphth-1-yl or 2-hydroxy-4-nitrophen-1-yl radical and the benzene ring E is unsubstituted, and one molecule of the azo dye of the formula (8) in which $D_1$-$Z_1$ is a 2-hydroxy-5-nitrophen-1-yl, 2-hydroxy-4-sulfonaphth-1-yl or 2-hydroxy-4-nitrophen-1-yl radical and $K_1$-$Z_2$ is a 1-hydroxy-5,8-dichloronaphth-2-yl, 2-hydroxynaphth-1-yl, 2-hydroxy-6-sulfonaphth-1-yl or 1-phenyl-3-methyl-5-pyrazolone radical, and Y′ is a nitrogen atom.

17. A heavy metal complex according to claim 11, wherein one molecule of the formula (5) or (7) in which D-OH is a 2-hydroxy-4-nitrophen-1-yl, 2-hydroxy-4-nitro-5-sulfophen-1-yl, 2-hydroxy-4-sulfonaphth-1-yl, 2-hydroxy-4-sulfo-6-nitronaphth-1-yl, 2-hydroxy-4-sulfo-6-aminonaphth-1-yl, 2-hydroxy-4-sulfo-6-(α,β-dibromopropionylamino)-naphth-1-yl or 2-carboxy-4-sulfophen-1-yl radical, the benzene ring E in the formula (5) is unsubstituted and in the formula (7) can be substituted by nitro, amino or α,β-dibromopropionylamino, and R′ is hydrogen, is bonded to one atom of chromium.

18. A process for preparing a heavy metal complex according to claim 1, which comprises reacting azo or azomethine dyes of the formula (1) with a heavy metal or a complex containing a heavy metal.

19. Use of a heavy metal complex according to any one of claims 1 to 17 or of the heavy metal complex obtained according to claim 18, for dyeing and printing.

20. Use according to claim 19, for dyeing and printing textile fibre materials made of cellulose, wool, synthetic polyamide or silk and also leather.

## Revendications

1. Complexes de métaux lourds de colorants azoïques ou azométhine de formule

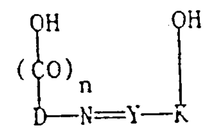
(1)

dans laquelle D est le reste d'un composant diazotable de la série du benzène, du naphtalène ou de la série hétérocyclique, K-OH est un radical de formule

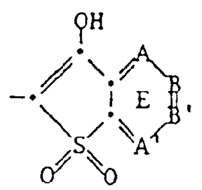
(2),
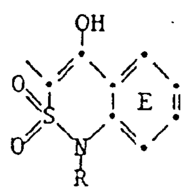
(3) ou
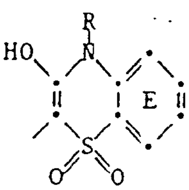
(4)

les symboles A, A′, B et B′ représentant chacun un atome de carbone, ou l'un des symboles A, A′, B ou B′ représentant un atome d'azote et les autres représentant chacun un atome de carbone, R représentant un atome d'hydrogène ou un radical alkyle en $C_1$-$C_4$ éventuellement substitué ou phényle éventuellement substitué, et le cycle E pouvant être encore substitué davantage, Y est un atome d'azote ou un groupe CH et n vaut 0 ou 1, et dans laquelle $-(CO)_n$-OH est lié à D en position voisine par rapport à -N=Y-.

2. Complexes de métaux lourds selon la revendication 1, qui contiennent, en tant que métal lourd, un atome de cuivre, nickel, fer, cobalt ou chrome.

3. Complexes de métaux lourds selon la revendication 2, dans lesquels deux molécules du colorant azoïque ou azométhine de formule (1) sont liées à un atome de nickel ou de cobalt.

4. Complexes de métaux lourds selon la revendication 2, dans lesquels une ou deux molécules du colorant azoïque ou azométhine de formule (1) est(sont) liée(s) à un atome de chrome.

5. Complexes de métaux lourds selon la revendication 1, dans lesquels une molécule du colorant azoïque ou azométhine de formule (1) et une molécule d'un autre composé azoïque ou azométhine métallable sont liées à un atome de chrome.

6. Complexes de métaux lourds selon l'une des revendications 1 à 5, dans lesquels Y est un atome d'azote.

7. Complexes de métaux lourds selon l'une des revendications 1 à 6, dans lesquels les symboles A, A′, B et B′ représentent chacun un atome de carbone.

8. Complexes de métaux lourds selon l'une des revendications 1 à 6, dans lesquels A, A′ et B représentent

chacun un atome de carbone et B′ représente un atome d'azote.

9. Complexes de métaux lourds selon l'une des revendications 1 à 8, dans lesquels le colorant azoïque ou azométhine de formule (1) contient un ou deux groupes sulfo ou n'en contient aucun.

10. Complexes de métaux lourds selon la revendication 6, de colorants azoïques de formule

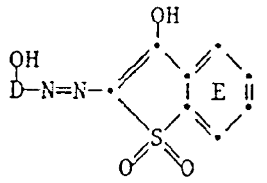 (5), 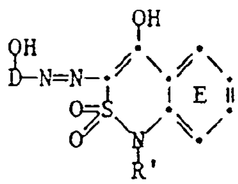 (6) ou 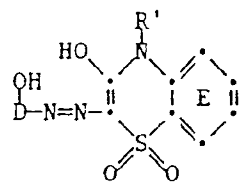 (7)

dans lesquelles formules D est un radical phényle ou naphtyle éventuellement substitué par des atomes d'halogène ou des groupes alkyle en $C_1$-$C_4$, alcoxy en $C_1$-$C_4$, alcanoyl($C_2$-$C_6$)-amino, alcoxy($C_1$-$C_6$)-carbonylamino, benzoylamino, amino, mono- ou dialkylamino ayant chacun de 1 à 4 atomes de carbone dans le fragment alkyle, phénylamino, alcoxy($C_1$-$C_4$)-carbonyle, nitro, cyano, trifluorométhyle, sulfamoyle, sulfamoyle substitué par un reste alkyle en $C_1$-$C_4$ ou alcoxy($C_1$-$C_4$)-alkyle($C_1$-$C_4$), des groupes carbamoyle, uréido, hydroxy, alkyl($C_1$-$C_4$)-sulfonyle, carboxy, sulfométhyle, sulfo, des radicaux réactifs avec les fibres et des groupes phénylazo, ou dans lesquelles formules D-OH est un radical carboxyphényle éventuellement substitué par les substituants indiqués, R′ est un atome d'hydrogène ou un groupe alkyle en $C_1$-$C_4$, et le cycle benzénique E peut être substitué par des atomes d'halogène ou par des groupes alkyle en $C_1$-$C_4$, alcoxy en $C_1$-$C_4$, alcanoyl($C_2$-$C_6$)-amino, alcoxy($C_1$-$C_6$)-carbonylamino, benzoylamino, amino, mono- ou dialkylamino ayant chacun de 1 à 4 atomes de carbone dans le fragment alkyle, phénylamino, alcoxy($C_1$-$C_4$)-carbonyle, nitro, cyano, trifluorométhyle, sulfamoyle, carbamoyle, uréido, hydroxy, alkyl($C_1$-$C_4$)-sulfonyle, carboxy, sulfométhyle, sulfo, des radicaux réactifs avec les fibres et des groupes phénylazo, et dans lesquelles formules le groupe hydroxy en D est en position ortho par rapport au groupe azoïque.

11. Complexes de métaux lourds selon la revendication 10, qui contiennent, en tant que métal lourd, un atome de cobalt ou de chrome.

12. Complexes de métaux lourds selon la revendication 11, dans lesquels deux molécules du colorant azoïque de formule (5), (6) ou (7) sont liées à un atome de cobalt.

13. Complexes de métaux lourds selon la revendication 11, dans lesquels une molécule du colorant azoïque de formule (5), (6) ou (7) et une molécule du colorant de formule

$$\overset{Z_1}{\underset{|}{D_1}}-N=Y'-\overset{Z_2}{\underset{|}{K_1}} \qquad (8),$$

dans laquelle $D_1$ est le reste d'un composant diazotable de la série du benzène ou du naphtalène ou de la série hétérocyclique, $K_1$ est le reste d'un copulant de la série du benzène, du naphtalène ou de la série hétérocyclique, ou d'un composé cétométhylène, Y′ est un atome d'azote ou le groupe CH, $Z_1$ est un groupe -OH ou -COOH ou -$NH_2$ en position ortho par rapport à -N=Y′-, et $Z_2$ est un groupe -OH ou -NH(R), R étant un atome d'hydrogène ou un groupe alkyle en $C_1$-$C_4$ éventuellement substitué ou un groupe phényle éventuellement substitué, et $Z_2$ est lié à $K_1$ en position voisine par rapport à -N=Y′-, sont liées à un atome de chrome.

14. Complexes de métaux lourds selon la revendication 13, dans lesquels $D_1$ est un radical phényle ou napthyle éventuellement substitué par des atomes d'halogène ou par des groupes alkyle en $C_1$-$C_4$, alcoxy en $C_1$-$C_4$, alcanoyl($C_2$-$C_6$)-amino, alcoxy($C_1$-$C_6$)-carbonylamino, benzoylamino, amino, mono- ou dialkylamino ayant chacun de 1 à 4 atomes de carbone dans le fragment alkyle, phénylamino, alcoxy($C_1$-$C_4$)-carbonyle, nitro, cyano, trifluorométhyle, sulfamoyle, carbamoyle, uréido, hydroxy, alkyl($C_1$-$C_4$)-sulfonyle, carboxy, sulfométhyle, sulfo, des radicaux réactifs avec les fibres et des groupes phénylazo, et $K_1$ est un reste d'un copulant de la série du benzène ou du naphtalène, ou de la série de la 5-pyrazolone, du 5-aminopyrazole, de la quinoléine, des acétoacétarylides ou des benzoylacétarylides, éventuellement substitué par des atomes d'halogène ou des groupes alkyle en $C_1$-$C_4$, alcoxy en $C_1$-$C_4$, alcanoyl($C_2$-$C_6$)-amino, alcoxy($C_1$-$C_6$)-carbonylamino, benzoylamino, amino, mono- ou dialkylamino ayant chacun de 1 à 4 atomes de carbone dans le fragment alkyle, phénylamino, alcoxy($C_1$-$C_4$)-carbonyle, nitro, cyano, trifluorométhyle, sulfamoyle, carbamoyle, uréido, hydroxy, alkyl($C_1$-$C_4$)-sulfonyle, carboxy, sulfométhyle, sulfo, des radicaux réactifs avec les fibres et des groupes phénylazo, et Y′ représente un atome d'azote.

15. Complexes de métaux lourds selon la revendication 11, dans lesquels deux molécules de formule (5),

(6) ou (7), dans lesquelles formules D-OH est le radical 2-hydroxy-4-nitrophényle-1, 2-hydroxy-5-nitrophényle-1, 2-hydroxy-4-nitro-5-sulfophényle-1, 2-hydroxy-3-sulfo-5-nitrophényle-1, 2-hydroxy-3-nitro-5-sulfophényle-1, 2-hydroxy-3-sulfo-5-chlorophényle-1, 2-hydroxy-4-sulfonaphtyle-1, 2-hydroxy-4-sulfo-6-nitronaphtyle-1, 2-hydroxy-4-sulfo-6-aminonaphtyle-1, 2-hydroxy-4-sulfo-6-(α,β-dibromopropionylamino)naphtyle-1, 2-hydroxy-5-(β-méthoxyéthyl-aminosulfonyl)phényle-1, 2-hydroxy-4-aminophényle-1, 2-hydroxy-4-(α,β-dibromopropionylamino)phényle-1 ou 2-carboxy-4-sulfophényle-1, et le cycle benzénique E dans les formules (5) et (6) n'est pas substitué et peut être substitué dans la formule (7) par le groupe nitro, amino ou α,β-dibromopropionylamino, et R' représente un atome d'hydrogène, sont liées à un atome de chrome ou de cobalt.

16. Complexes de métaux lourds selon la revendication 13, qui contiennent, liées, une molécule du colorant azoïque de formule (5), dans lequel D-OH est le radical 2-hydroxy-4-sulfonaphtyle-1, 2-hydroxy-4-sulfo-6-nitronaphtyle-1 ou 2-hydroxy-4-nitrophényle-1 et le cycle benzénique E n'est pas substitué, et une molécule du colorant azoique de formule (8), dans lequel $D_1$-$Z_1$ est le radical 2-hydroxy-5-nitrophényle-1, 2-hydroxysulfonaphtyle-1 ou 2-hydroxy-4-nitrophényle-1, et $K_1$-$Z_2$ est le radical 1-hydroxy-5,8-dichloronaphtyle-2, 2-hydroxynaphtyle-1, 2-hydroxy-6-sulfonaphtyle-1 ou 1-phényl-3-méthyl-5-pyrazolone, et Y' représente un atome d'azote.

17. Complexes de métaux lourds selon la revendication 11, dans lesquels une molécule de formule (5) ou (7), dans lesquelles formules D-OH est un radical 2-hydroxy-4-nitrophényle-1, 2-hydroxy-4-nitro-5-sulfophényle-1, 2-hydroxy-4-sulfonaphtyle-1, 2-hydroxy-4-sulfo-6-nitronaphtyle-1, 2-hydroxy-4-sulfo-6-aminonaphtyle-1, 2-hydroxy-4-sulfo-6-(α,β-dibromopropionylamino)naphtyle-1 ou 2-carboxy-4-sulfophényle-1, et le cycle benzénique E n'est pas substitué dans la formule (5) et peut être substitué dans la formule (7) par le groupe nitro, amino ou α,β-dibromo- propionylamino, et R' représente un atome d'hydrogène, est liée à un atome de chrome.

18. Procédé pour la préparation de complexes de métaux lourds selon la revendication 1, caractérisé en ce que l'on fait réagir des colorants azoïques ou azométhine de formule (1) avec un métal lourd ou un complexe contenant un métal lourd.

19. Utilisation des complexes de métaux lourds selon l'une des revendications 1 à 17 ou des complexes de métaux lourds obtenus selon la revendication 18, pour la teinture ou l'impression.

20. Utilisation selon la revendication 19, pour la teinture ou l'impression de matériaux fibreux textiles à base de cellulose, laine, polyamide synthétique ou soie, ainsi que du cuir.